# EUROPEAN PATENT SPECIFICATION

(11) **EP 3 127 182 B1**
(45) Date of publication and mention of the grant of the patent: **25.11.2026**
(21) Application number: 15773826.1
(22) Date of filing: 12.03.2015
(51) Int. Cl.: H01M 50/528, H01M 50/502, H01M 10/0562, H01M 10/0585, H01M 10/04, H01M 6/40, H01M 6/46

(54) **FORMING AN INTERCONNECTION FOR SOLID-STATE BATTERIES**
HERSTELLUNG EINER VERBINDUNG FÜR FESTSTOFFBATTERIEN
FORMATION D'UNE INTERCONNEXION POUR BATTERIES À ÉLECTROLYTE SOLIDE

(30) Priority: 31.03.2014 US 201414230796
(43) Date of publication of application: 08.02.2017
(73) Proprietor: Google LLC, Mountain View, CA 94043 (US)
(72) Inventor: BHARDWAJ, Ramesh C., Mountain View, CA 94043 (US)
(74) Representative: Marks & Clerk GST
(86) International application number: PCT/US2015/020175
(87) International publication number: WO 2015/153095

(56) References cited:
- WO-A1-2013/044114
- KR-B1- 100 387 121
- KR-B1- 100 412 076
- US-A1- 2007 218 310
- US-A1- 2009 208 671
- US-A1- 2010 227 214
- US-A1- 2013 201 545
- US-A1- 2013 220 546
- US-A1- 2014 087 227

## Description

### CROSS-REFERENCE TO RELATED APPLICATION

This application claims priority to U.S. Patent Application No. 14/230,796, filed March 31, 2014.

### BACKGROUND

Unless otherwise indicated herein, the materials described in this section are not prior art to the claims in this application and are not admitted to be prior art by inclusion in this section.

Lithium-ion and lithium polymer batteries are generally composed of a lithium cobalt oxide (LiCoO₂) cathode, a graphite anode, a polymer separator, and a liquid electrolyte. One drawback of these lithium-ion and lithium polymer batteries is that the liquid electrolyte presents safety issues. In some instances, the liquid electrolyte may become flammable if a short occurs between the anode and cathode of the battery (*e.g*., due to defects or mishandling). Another drawback of conventional lithium-ion and lithium polymer batteries is that, because these batteries have a high ratio of inactive materials (*e.g*., polymer separator, liquid electrolyte) to active materials (*e.g*., LiCoO₂ cathode and graphite anode), they have a limited energy density of approximately 500-550 Wh/L.

Solid-state batteries can provide an improvement over conventional lithium-ion and lithium polymer batteries in both energy density and safety. Solid-state batteries are typically composed of a LiCoO₂ cathode, a lithium anode, and a solid-state lithium phosphorous oxynitride (LiPON) electrolyte, which also acts as a separator. The lithium anode has a theoretical specific capacity of approximately 3800 mAh/g (as compared with the graphite anode used in lithium-ion and lithium polymer batteries, which has a theoretical specific capacity of only approximately 372 mAh/g), which allows for an increased energy density of solid-state batteries.

Because solid-state batteries use a solid-state electrolyte, rather than a liquid electrolyte, solid- state batteries may avoid the safety issues that lithium- ion and lithium polymer batteries do.

According to its abstract, US-A-2013/201545 describes systems and methods for creating monolithically integrated electrochromic devices which may be a flexible electrochromic device. Monolithic integration of thin film electrochromic devices may involve the electrical interconnection of multiple individual electrochromic devices through the creation of specific structures such as conductive pathway or insulating isolation trenches.

### SUMMARY

Example embodiments herein disclose the use of one or more lasers to form channels through a solid-state battery. Furthermore, a method of manufacturing a solid-state battery is provided in which interconnections are formed *through* the solid-state battery, such that conventional connectors and tabs are not required. Forming *inter*connections through solid -state battery cells in parallel or in series eliminates the use of conventional connectors and tabs. In some embodiments, a laser may be used to penetrate (e.g., drill, puncture, perforate) and/or create a hole through one or more battery cells.

Disclosed herein are batteries with a substrate including a first side and a second side, where a first cathode current collector and a first anode current collector are on the first side of the substrate, and where a second cathode current collector and a second anode current collector are on the second side of the substrate. The substrate is a stand-alone layer of yttria-stabilized zirconia, (YSZ). Further, the battery includes a first channel through the substrate between the first cathode current collector and the second cathode current collector. Yet further, the battery includes a second channel through the substrate between the first anode current collector and the second anode current collector. In addition, the battery includes a cathode interconnection, via the first channel, between the first cathode current collector and the second cathode current collector. In addition, the battery includes an anode interconnection, via the second channel, between the first anode current collector and the second anode current collector.

Also disclosed are methods of manufacturing a battery. Such methods include providing on a first side of a substrate a first cathode current collector and a first anode current collector. Further, the methods include providing on a second side of the substrate a second cathode current collector and a second anode current collector. Yet further, the methods include using at least one laser to form: (a) a first channel through the substrate, wherein the first channel is between the first cathode current collector and the second cathode current collector, and (b) a second channel through the substrate, where the second channel is between the first anode current collector and the second anode current collector. In addition, the methods include forming a cathode interconnection, via the first channel, between the first cathode current collector and the second cathode current collector. In addition the methods include forming an anode interconnection, via the second channel, between the first anode current collector and the second anode current collector. The substrate is a stand-alone layer of yttria-stabilized zirconia (YSZ).

Also disclosed are methods of manufacturing a number of solid-state batteries. Such methods include providing a roll comprising a number of substrates, wherein each of the plurality of substrates is a stand-alone layer of yttria-stabilized zirconia (YSZ), and wherein for each substrate in the plurality of substrates: (1 ) forming on a first side of the substrate a first cathode current collector and a first anode current collector, and forming on a second side of the substrate a second cathode current collector and a second anode current collector; (2) forming on the first side of the substrate a first cathode, and forming on the second side of the substrate a second cathode; (3) annealing the first cathode and the second cathode at a temperature; (4) forming on the first side of the substrate a first solid- state electrolyte, and forming on the second side of the substrate a second solid-state electrolyte; (5) forming on the first side of the substrate a first anode, and forming on the second side of the substrate a second anode; and (6) forming a cathode interconnection between the first cathode current collector and the second cathode current collector, and forming an anode interconnection between the first anode current collector and the second anode current collector.

These as well as other aspects, advantages, and alternatives will become apparent to those of ordinary skill in the art by reading the following detailed description, with reference where appropriate to the accompanying drawings.

### BRIEF DESCRIPTION OF THE DRAWINGS

Figures 1A to 1C illustrate example solid-state batteries, in accordance with some embodiments.
Figure 2A is a flowchart describing a method manufacturing a solid-state battery, in accordance with some embodiments.
Figure 2B is a flowchart describing a method of forming an interconnection, in accordance with some embodiments.
Figures 3A to 3G illustrate a method of manufacturing a solid-state battery, in accordance with some embodiments.
Figures 4A to 4C illustrates aspects of forming an interconnection in solid-state batteries, in accordance with some embodiments.
Figure 5 is a flowchart describing a method of manufacturing a number of solid-state batteries, in accordance with some embodiments.
Figures 6A to 6C illustrate a method of manufacturing a number of solid-state batteries, in accordance with some embodiments.

### DETAILED DESCRIPTION

Example methods and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. In the following detailed description, reference is made to the accompanying figures. In the figures, similar symbols typically identify similar components, unless context dictates otherwise. Other embodiments may be utilized, and other changes may be made, without departing from the scope of the subject matter presented herein.

### I. Overview

Connecting solid-state batteries in parallel or in series can present several challenges. In some instances, connecting a battery in parallel or in series generally requires a connector for each lead of the battery. When connecting multiple batteries, the number of connectors increases rapidly, possibly adversely affecting performance. For example, using multiple connectors may present difficulties in maintaining energy density, and at the same time, increasing the impedance of the batteries and thus, diminishing discharge performance. In additional aspects, such connectors may require tabs that take up additional space in circuitry (*e.g.*, board space) and increase costs associated with added hardware.

Example embodiments may help to provide the benefit of solid-state batteries, while reducing or eliminating the drawbacks described above. In particular, example embodiments disclose the use of one or more lasers to form channels through the solid-state battery. Furthermore, a novel method of manufacturing such battery cells is provided in which interconnections are formed *through* the solid-state battery, such that conventional connectors and tabs are not required. Forming *inter*connections through solid-state battery cells in parallel or in series eliminates the use of conventional connectors and tabs. In some embodiments, a laser may be used to penetrate (*e.g*., drill, puncture, perforate) and/or create a hole through one or more battery cells.

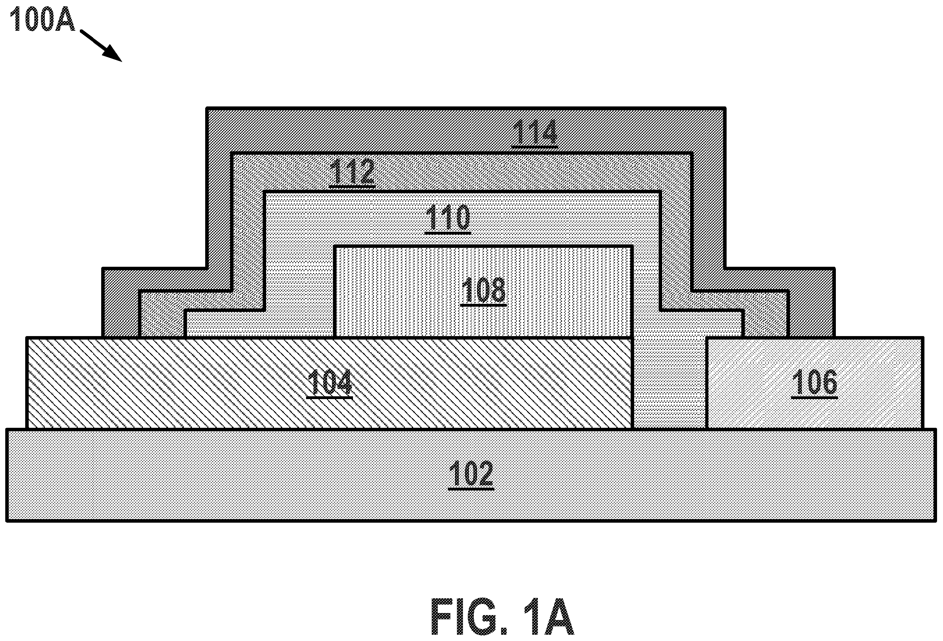

Figure 1A illustrates an example solid-state battery 100A, in accordance with an example embodiment. For example, the solid-state battery 100A may be used to power a head-mountable device. Figure 1A illustrates an example side or a cross-sectional view of the solid-state battery 100A. As shown, the solid-state battery 100A includes a substrate 102, a first cathode current collector 104, a first anode current collector 106, a first cathode 108, a first solid-state electrolyte 110, a first anode 112, and a first protective coating 114.

The substrate 102 may be formed of materials such as glass, semiconductors, mica, or possibly other non-conducting materials. In some embodiments, substrate 102 may be formed with copper, stainless steel, and/or polyimide. Yet further, in some embodiments, substrate 102 may be formed of yttria-stabilized zirconia (YSZ), a flexible ceramic that can withstand high temperatures.

The substrate 102 may take any number of dimensions. In some embodiments, the substrate 102 may have a thickness between, for example, about 20 µm and about 40 µm. Other thicknesses are possible as well. The dimensions of the substrate 102, including, for example, a planar area and the thickness of the substrate 102, may vary by application of the solid-state battery 100A.

The first cathode current collector 104 and the first anode current collector 106 may each be formed of one or more electrically conductive materials. In some embodiments, one or both of the first cathode current collector 104 and the first anode current collector 106 may be formed by one or more of cobalt, gold, stainless steel, and nickel. In some embodiments, one or both of the first cathode current collector 104 and the first anode current collector 106 may take the form of a sheet, a foil, or a powder. Other materials and forms are possible as well.

The first cathode current collector 104 and the first anode current collector 106 may each take any number of dimensions. In some embodiments, one or both of the first cathode current collector 104 and the first anode current collector 106 may have a thickness between, for example, about 3 µm and about 4 µm. Other thicknesses are possible as well. The dimensions of the first cathode current collector 104 and the first anode current collector 106, including, for example, planar areas and the thicknesses of the first cathode current collector 104 and the first anode current collector 106, may vary by application of the solid-state battery 100A.

As shown, the first cathode 108 is in electrical contact with the first cathode current collector 104. The first cathode 108 may be formed of, for example, LiCoO₂. Other cathode materials are possible as well. The first cathode 108 may take any number of dimensions. In some embodiments, the first cathode 108 may have a thickness between, for example, about 5 µm and about 15 µm. Other thicknesses are possible as well. As a general matter, a greater thickness of the first cathode 108 may be grown on substrate 102 formed with YSZ compared to the substrate 102 formed with other materials such as copper, polyimide, and stainless steel. The dimensions of the first cathode 108, including, for example, a planar area and thickness of the first cathode 108, may vary by application of the solid-state battery 100A.

As shown, the first solid-state electrolyte 110 may be formed between the first cathode 108 and the first anode 112. In some embodiments, the first solid-state electrolyte may be formed of lithium phosphorous oxynitride (LiPON). Other solid-state electrolyte materials are possible as well. The first solid-state electrolyte 110 may take any number of dimensions within the solid-state battery 100A. In some embodiments, the first solid-state electrolyte 110 may have a thickness between, for example, about 1 µm and 3 µm. Other thicknesses are possible as well. The dimensions of the first solid-state electrolyte 110, including, for example, a planar area and the thickness of the first solid-state electrolyte 110, may vary by application of the solid-state battery 100A.

As shown, the first anode 112 is in electrical contact with the first anode current collector 106. The first anode 112 may be formed of, for example, lithium metal. Other anode materials are possible as well. The first anode 112 may take any number of dimensions. In some embodiments, the first anode 112 may have a thickness between, for example, about 2 µm to 4 µm. Other thicknesses are possible as well. The dimensions of the first anode 112, including, for example, a planar area and the thickness of the first anode 112, may vary by application of the solid-state battery 100A.

In some embodiments, the solid-state battery 100A may be connected to a circuit (such as, for example, the circuit of an electronic device and/or a head-mountable device). In some instances, the solid-state battery 100A may include one or more connectors (not shown in Figure 1A) to establish an electrical connection between the first cathode current collector 104 and the circuit. Further, the first anode current collector 106 may include one or more other connectors (also not shown in Figure 1A) to establish an electrical connection between the first anode current collector 106 and the circuit.

In some embodiments, the solid-state battery 100A may power a circuit. In some instances, the solid-state battery 100A may power a circuit by means of a chemical reaction between the first anode 112 and the first cathode 108. In particular, when the solid-state battery 100A is connected into the circuit, the first anode 112 may undergo an oxidation reaction in which ions from the first anode 112 move through the first solid-state electrolyte 110 towards the first cathode 108, resulting in the release of electrons from the first anode 112 into the circuit. Concurrently, when the solid-state battery 100A is connected into the circuit, the first cathode 108 may undergo a reduction reaction in which the ions moving through the first solid-state electrolyte 110 combine with the first cathode 108, resulting in the absorption at the first cathode 108 of the electrons released by the first anode 112 into the circuit. The release of the electrons at the anode 112 and absorption of the electrons at the first cathode 108 may produce an electrical current that powers the circuit.

In some embodiments, the solid-state battery 100A may further include a first protective coating 114, as shown in Figure 1A. The first protective coating 114 may, for example, substantially cover the first anode 112, thereby protecting the solid-state battery 100A from contamination and extending the life of the solid-state battery 100A. In some embodiments, the protective coating 114, for example, may not cover portions of the first cathode current collector 104 and the first anode current collector 106, possibly to connect the solid-state battery 100A to a circuit. In some embodiments, the protective coating 114 may be formed of silicon dioxide (SiO₂), alumina, and/or a ceramic. Other protective coating materials are possible as well.

The solid-state battery 100A may take any number of dimensions. In some embodiments, for example, the solid-state battery 100A may have a thickness between about 30 µm and about 60 µm. Other thicknesses of the solid-state battery 100A are possible as well. The dimensions of the solid-state battery 100A, including, for example, a planar area and the thickness of the solid-state battery 100A, may vary by application of the solid-state battery 100A.

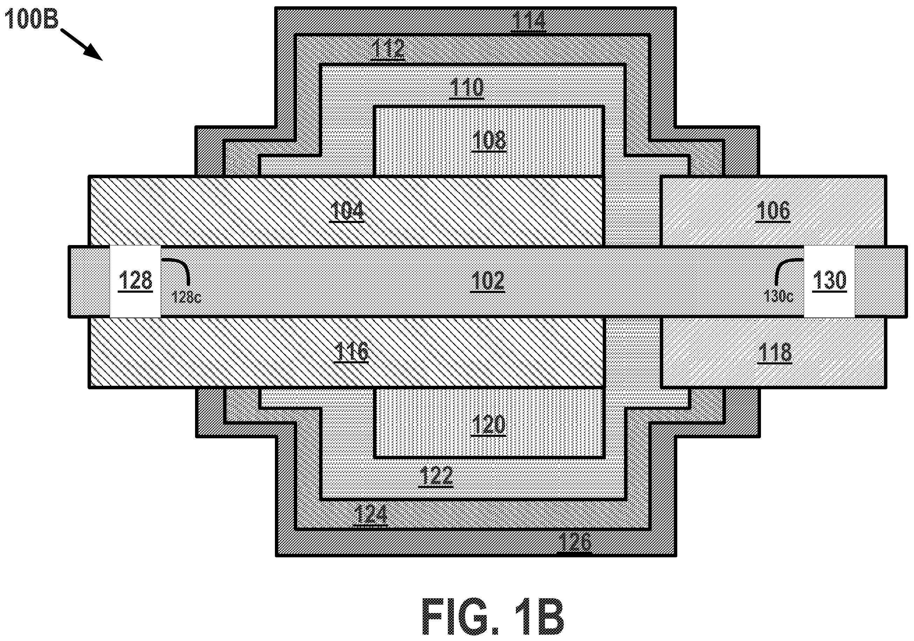

In some embodiments, possibly to improve an energy density of the solid-state battery 100, it may be desirable for a solid-state battery 100B to be a double-sided solid-state battery, as shown in Figure 1B. Figure 1B illustrates an example side or cross-sectional view of the solid-state battery 100B. In some embodiments, the solid-state battery 100B may be used to power a head-mountable device. As illustrated, the solid-state battery 100B includes the substrate 102 with a first side above the substrate 102 and a second side below the substrate 102. On the first side of the substrate 102, the solid-state battery 100B includes the first cathode current collector 104, the first anode current collector 106, the first cathode 108, the first solid-state electrolyte 110, and the first anode 112, as described in relation to Figure 1A. Further, on the second side of the substrate 102, the solid-state battery 100B includes a second cathode current collector 116, a second anode current collector 118, a second cathode 120, a second solid-state electrolyte 122, and a second anode 124 that may take any of the forms described above for the first cathode current collector 104, the first anode current collector 106, the first cathode 108, the first solid-state electrolyte 110, and the first anode 112, respectively, in relation to Figure 1A.

In some embodiments, the components on the first side of the substrate 102 (including, for example, the first cathode current collector 104, the first anode current collector 106, the first cathode 108, the first solid-state electrolyte 110, and the first anode 112) may be collectively referred to as an "upper" single-sided cell or battery. Yet further, the components on the second side of the substrate 102 (including, for example, the second cathode current collector 116, the second anode current collector 118, the second cathode 120, the second solid-state electrolyte 122, and the second anode 124) may be collectively referred to as a "lower" single-sided cell or battery. In some embodiments, the upper single-sided cell or battery of the solid-state battery 100B may be the solid-state battery 100A in relation to Figure 1A.

In some embodiments, possibly to eliminate wires, soldering, and external tabs to connect solid-state batteries in series or parallel, interconnections may be formed in the solid-state battery 100B, as shown in Figure 1B. As illustrated, the solid-state battery 100B includes a first channel 128c through the substrate 102 between the first cathode current collector 104 and the second cathode current collector 116. Further, the solid-state battery 100b includes a second channel 130c through the substrate 102 between the (first) anode current collector 106 and the second anode current collector 118.

In some embodiments, one or both of the first channel 128c and the second channel 130c may formed by a laser. Further, in some embodiments, the first channel 128c may be located in a first corner of the substrate 102 and the second channel 130c may be located in a second corner of the substrate 102 adjacent to the first corner of the substrate 102. The first channel 128c and the second channel 130c may also be located in other locations of the substrate 102 as well.

As illustrated in Figure 1B, the solid-state battery 100B may include a cathode interconnection 128 and an anode interconnection 130. In some embodiments, the solid-state battery 100B may include the cathode interconnection 128, via the first channel 128c, between the first cathode current collector 104 and the second cathode current collector 116. Further, the solid-state battery 100B may include the anode interconnection 130, via the second channel 130c, between the first anode current collector 106 and the second anode current collector 118.

In some embodiments, the cathode interconnection 128 and the anode interconnection 130 may form electrical connections within the solid-state battery 100B. In some embodiments, the cathode interconnection 128 and the anode interconnection 130 may be formed of silver, gold, copper, antimony, tin, or a combination thereof. In some embodiments, the cathode interconnection 128 and the anode interconnection 130 may include conductive materials such as an ink, a paste, an epoxy, a wire, a cable, and/or a connector. Thus, the cathode interconnection 128 may establish an electrical connection between the cathode current collector 104 and the second cathode current collector 116. Further, the anode interconnection 130 may establish an electrical connection between the anode current collector 106 and the second anode current collector 118. Other interconnections in the solid-state battery 100B are possible as well.

In some embodiments, the solid-state battery 100B may be connected to a circuit (such as, for example, the circuit of an electronic device and/or a head-mountable device). In some instances, one or more connectors (not shown in Figure 1B) may establish an electrical connection between any of the cathode current collectors (the cathode current collector 104 and the second cathode current collector 116) and the circuit. Further, one or more other connectors (also not shown in Figure 1B) may establish an electrical connection between any of the anode current collectors (the anode current collector 106 and the second anode current collector 118) and the circuit. Thus, the solid-state battery 100B may power the circuit by means of a chemical reaction in the upper single-sided cell as described in relation to Figure 1A and similarly in the lower single-sided cell.

In some embodiments, the solid-state battery 100B may further include a first protective coating 114 and a second protective coating 126, as shown in Figure 1B. The first protective coating and the second protective coating 126 may, for example, substantially cover the first anode 112 and the second anode 124, thereby protecting the solid-state battery 100B from contamination and extending the life of the solid-state battery 100B. In some embodiments, the first protective coating 114 and the second protective coating 126, for example, may not cover portions of the first cathode current collector 104 and the first anode current collector 106, the second cathode current collector 116, and the second anode current collector 118, possibly to connect the solid-state battery 100B to a circuit. In some embodiments, the first protective coating 114 and the second protective coating 126 may be formed of SiO₂, alumina, and/or a ceramic. Other protective coating materials are possible as well.

The solid-state battery 100B may take any number of dimensions. In some embodiments, for example, the solid-state battery 100B may have about twice the thickness of a single-sided cell or battery. In some embodiments, the solid-state battery 100B may have a thickness of about 40 µm and about 80 µm. Other thicknesses of solid-state battery 100B are possible as well. The dimensions of solid-state battery 100B, including, for example, a planar area and the thickness of the solid-state battery 100B, may vary by application of the solid-state battery 100B.

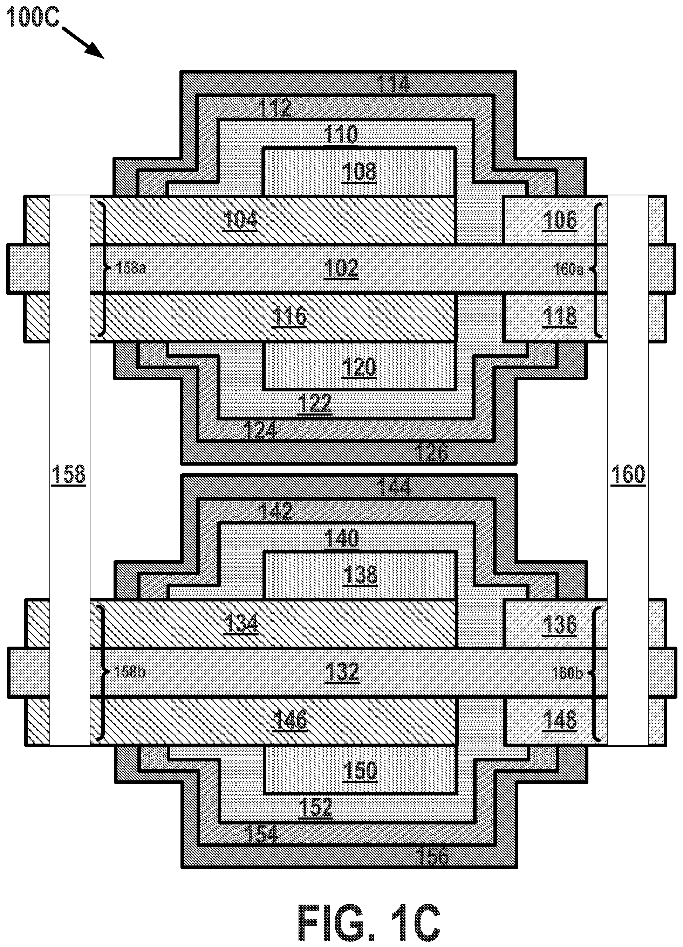

In some embodiments, possibly to further improve an energy density of a solid-state battery, it may be desirable for a solid-state battery 100C to include multiple double-sided batteries, as shown in Figure 1C. Figure 1C illustrates an example side or cross-sectional view of the solid-state battery 100C. In some embodiments, the solid-state battery 100C may be used to power a head-mountable device. As illustrated, Figure 1C shows two double-sided batteries, where a first double-sided battery (shown on top) is aligned and stacked with a second double-sided battery (shown on the bottom). In some instances, an insulator that is about 25 µm thick may be placed between the first double-sided battery and the second double-sided battery. It should be understood that the first double-battery and the second double-battery may also be connected without stacking, possibly by other arrangements.

Further, as illustrated in Figure 1C, the first double-sided battery may include the substrate 102 with a first side above the substrate 102 and a second side below the substrate 102, as described in relation to Figure 1B. On the first side the substrate 102, the first double-sided battery may include the first cathode current collector 104, the first anode current collector 106, the first cathode 108, the first solid-state electrolyte 110, and the first anode 112, that may take any of the forms described above in relation to Figures 1A and 1B. Further, on the second side, the first double-sided battery may also include the second cathode current collector 116, the second anode current collector 118, the second cathode 120, the second solid-state electrolyte 122, and the second anode 124 that may take any of the forms described for the cathode current collector 104, the anode current collector 106, the cathode 108, the solid-state electrolyte 110, and the anode 112, respectively, in relation to Figures 1A and 1B.

In addition, the second double-sided battery may include the second substrate 132 with a first side above the second substrate 132 and a second side below the second substrate 132. On the first side of the second substrate 132, the second double-sided battery may include a third cathode current collector 134, a third anode current collector 136, a third cathode 138, a third solid-state electrolyte 140, and a third anode 142 that may take any of the forms described above for the first cathode current collector 104, the first anode current collector 106, the first cathode 108, the first solid-state electrolyte 110, and the first anode 112, respectively, in relation to Figures 1A through 1C.

Further, on the second side of the second substrate 132, the second double-sided battery may include a fourth cathode current collector 146, a fourth anode current collector 148, a fourth cathode 150, a fourth solid-state electrolyte 152, and a fourth anode 154 that may take any of the forms described for the second cathode current collector 116, the second anode current collector 118, the second cathode 120, the second solid-state electrolyte 122, and the second anode 124, respectively, in relation to Figures 1B and 1C.

In some embodiments, possibly to eliminate wires, soldering, and external tabs to connect the double-sided batteries connected in series or parallel, interconnections may be formed in the solid-state battery 100C, as shown in Figure 1C. As illustrated, the solid-state battery 100C includes a first channel 158a through the substrate 102 between the first cathode current collector 104 and the second cathode current collector 116. Further, the solid-state battery 100C includes a second channel 160a through the substrate 102 between the first anode current collector 106 and the second anode current collector 118. In some embodiments, the first channel 158a and the second channel 160a may take any of the forms described above for channel 128c and 130c, respectively, in relation to Figure 1B.

In some embodiments, one or both of the first channel 158a and the second channel 160a may formed by a laser. Further, in some embodiments, the first channel 158a may be located in a first corner of the substrate 102, and the second channel 160a may be located in a second corner of the substrate 102, adjacent to the first corner of the substrate 102.

Further, as illustrated, the solid-state battery 100C includes a third channel 158b through the second substrate 132 between the third cathode current collector 134 and the fourth cathode current collector 146, and a fourth channel 160b through the second substrate 132 between the third anode current collector 136 and the fourth anode current collector 148. In some embodiments, the third channel 158b and the fourth channel 160b may take any of the forms described above for the first channel 158a and the second channel 160b, respectively, in relation to Figure 1C.

In some embodiments, one or both of the third channel 158b and the fourth channel 160b may formed by a laser. Further, in some embodiments, the third channel 158b may be located in a first corner of the second substrate 132, and the second channel 160a may be located in a second corner of the second substrate 132, adjacent to the first corner of the second substrate 132.

As illustrated in Figure 1C, the solid-state battery 100C includes a cathode interconnection 158 and an anode interconnection 160 that may take the forms described above for cathode interconnection 128 and anode interconnection 130, respectively, in relation to Figure 1B. Further, as illustrated, the solid-state battery 100C may include the cathode interconnection 158, via the first channel 158a, between the first cathode current collector 104 and the second cathode current collector 116. Yet further, the solid-state battery 100C may include the anode interconnection 160, via the second channel 160a, between the first anode current collector 106 and the second anode current collector 118.

In addition, as illustrated, the solid-state battery 100C may include the cathode interconnection 158, via the first channel 158b, between the third cathode current collector 134 and the fourth cathode current collector 146. Further, the solid-state battery 100C may include the anode interconnection 160, via the second channel 160b, between the third anode current collector 136 and the fourth anode current collector 148.

In some embodiments, the cathode interconnection 158 and the anode interconnection 160 may connect the first double-sided battery with the second double-sided battery. In particular, the cathode interconnection 158 may be formed through the cathode current collector 104, the substrate 102, the second cathode current collector 116, the third cathode current collector 134, the second substrate 132, and the fourth cathode current collector interconnection 146. Further, the anode interconnection 160 may be formed through the anode current collector 106, the second substrate 102, the second anode current collector 118, the third anode current collector 136, the second substrate 132, and the fourth anode current collector 148.

In some embodiments, the cathode interconnection 158 and the anode interconnection 160 may form electrical connections within the solid-state battery 100C. In some embodiments, the cathode interconnection 158 and the anode interconnection 160 may be formed of silver, gold, copper, antimony, tin, or a combination thereof. Further, the cathode interconnection 158 and the anode interconnection 160 may include conductive materials such as an ink, a paste, an epoxy, a wire, a cable, and/or a connector. In some embodiments, a conductive past or an epoxy may be used to fill the channels in the solid-state battery 100C and the remaining portions of the interconnections 158 and 160 may be wires or other connectors.

Thus, the cathode interconnection 158 may establish an electrical connection between cathode current collector 104, the second cathode current collector 116, the third cathode current collector 134, and the fourth cathode current collector interconnection 146. Further, the anode interconnection 160 may establish an electrical connection between the anode current collector 106, the second anode current collector 118, the third anode current collector 136, and the fourth anode current collector 148. Other interconnections in the multiple double-sided batteries are possible as well.

In some embodiments, the solid-state battery 100C may be connected to a circuit (such as, for example, the circuit of an electronic device and/or a head-mountable device). In some instances, one or more connectors (not shown in Figure 1C) may establish an electrical connection between any of the cathode current collectors (the first cathode current collector 104, the second cathode current collector 116, the third cathode current collector 134, and the fourth cathode current collector 146) and the circuit. Further, one or more other connectors (also not shown in Figure 1C) may establish an electrical connection between any of the anode current collectors (the first anode current collector 106, the second anode current collector 118, the third cathode current collector 136, and the fourth cathode current collector 148) and the circuit. Thus, the solid-state battery 100C may power the circuit by means of chemical reactions in the first double-sided battery and the second double-sided batter in manners described above in relation to Figures 1A and 1B.

In some embodiments, the solid-state battery 100C may include the first protective coating 114 and the second protective coating 126 that may take any of the forms described above in relation to Figures 1A and 1B. Further, the solid-state battery 100C may include the third protective coating 144 and the fourth protective coating 156 that may take any of the forms described above for the first protective coating 114 and the second protective coating 126, respectively, in relation to Figures 1A through 1C. The third protective coating 144 and the fourth protective coating 156 may, for example, substantially cover the third anode 142 and the fourth anode 154, respectively, thereby protecting the solid-state battery 100C from contamination and extending the life of the solid-state battery 100C.

In some embodiments, the third protective coating 144 and the fourth protective coating 156, for example, may not cover portions of the third cathode current collector 134, the third anode current collector 136, the fourth cathode current collector 146, and the fourth anode current collector 148, possibly to connect the solid-state battery 100C to a circuit.

The solid-state battery 100C may take any number of dimensions. In some embodiments, the solid-state battery 100C may take any number of dimensions depending on the number of double-sided batteries that may be interconnected. As illustrated in Figure 1C, for example, solid-state battery 100C may have a thickness of two double-sided batteries or between about 80 µm and about 160 µm. Other thicknesses of the solid-state battery 100C are possible as well. The dimensions of solid-state battery 100C, including, for example, a planar area and the thickness of the solid-state battery 100C, may vary by application of the multiple double-sided batteries.

### II. Example Methods for Manufacturing a Solid-State Battery

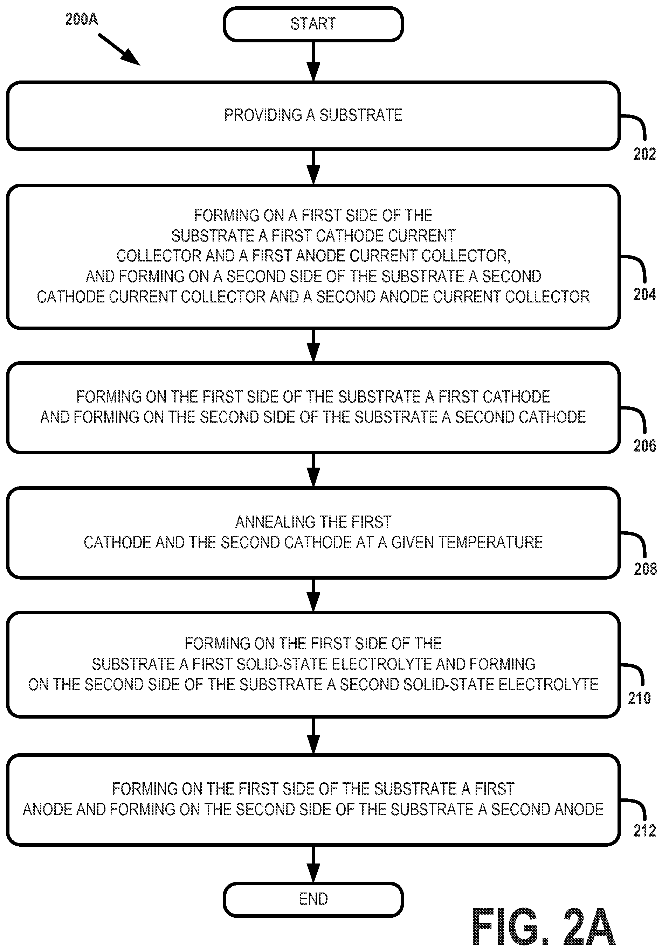

Figure 2A is a flowchart describing a method of manufacturing a solid-state battery, in accordance with some embodiments. As shown, the method 200A begins at block 202 with providing a substrate. The substrate may, for example, take any of the forms described above for the substrate 102 in relation to Figures 1A through 1C and the second substrate 132 in relation to Figure 1C.

In some embodiments, providing the substrate may involve acquiring a flexible ceramic. Further, providing the substrate may involve acquiring a manufactured substrate or a pre-manufactured substrate, such as the E-Strate^{®} substrate manufactured by ENrG Inc. of Buffalo, NY. In some embodiments, providing the substrate may involve manufacturing a yttria-stabilized zirconia (YSZ) substrate. The substrate is a stand-alone layer of YSZ. In some embodiments, the substrate may be cleaned with nitrogen and annealed at a temperature between about 700°C and about 800°C for about 2 to 4 hours. Further, the substrate may be examined for surface defects.

The method 200A continues at block 204 with forming on a first side of the substrate a first cathode current collector and a first anode current collector, and forming on a second side of the substrate a second cathode current collector and a second anode current collector. The first cathode current collector, the first anode current collector, the second cathode current collector, the second anode current collector may, for example, take any of the forms described above for the first cathode current collector 104, the first anode current collector 106, the second cathode current collector 116, and the second anode current collector 118, respectively, in relation to Figures 1B and 1C.

In some embodiments, one or more of the first cathode current collector, the first anode current collector, the second cathode current collector, the second anode current collector may be formed in advance, possibly involving adhering preformed anode and/or cathode current collectors to the substrate (*e.g*., using an adhesion layer between the substrate and the anode and/or cathode current collectors). The first cathode current collector, the first anode current collector, the second cathode current collector, the second anode current collector may also be examined for surface defects related to adhesion.

In addition, in some embodiments, forming one or more of the first cathode current collector, the first anode current collector, the second cathode current collector, the second anode current collector on the substrate may involve patterning (*e.*g., using lithography or photolithography) the anode and/or cathode current collectors onto the substrate. The first cathode current collector 104, the first anode current collector 106, the second cathode current collector 116, and the second anode current collector 118 may be formed concurrently, serially, and/or in groups. The anode and/or cathode current collectors may be formed in other manners as well.

The method 200A continues at block 206 with forming on the first side of the substrate a first cathode, and forming on the second side of the substrate a second cathode. The first cathode and the second cathode may, for example, take any of the forms described above for the first cathode 108 and the second cathode 120, respectively, in relation to Figures 1B and 1C. In some embodiments, forming the first cathode and the second cathode may involve, for example, depositing (e.g., sputtering) LiCoO₂ on the first cathode current collector to form the first cathode, and respectively, on the second cathode current collector to form the second cathode. The first and second cathodes may be formed in other manners as well. The first cathode 108 and the second cathode 120 may be formed concurrently, serially, and/or in groups.

The method 200A continues at block 208 with annealing the first cathode and the second cathode at a temperature. As a general matter, annealing serves to improve a crystallization and crystal orientation of the first cathode and the second cathode. Further, annealing at a temperature between about 700°C and about 800°C may further serve to improve the crystallization and crystal orientation of the first cathode and the second cathode. The annealing may take place in, for example, an enclosed heating apparatus, such as a furnace, a rapid thermal annealing system, or a flash annealing system. The first cathode and the second cathode may also be examined for layer quality, composition, and defects related to adhesion. The first cathode and the second cathode may be annealed in other manners as well.

The method 200A continues at block 210 with forming on the first side of the substrate a first solid-state electrolyte and forming on the second side of the substrate a second solid-state electrolyte. The first solid-state electrolyte and the second solid-state electrolyte may, for example, take any of the forms described above for the first solid-state electrolyte 110 and the second solid-state electrolyte 120 in relation to Figures 1B and 1C. In some embodiments, the first solid-state electrolyte and the second solid-state electrolyte may be formed of LiPON. Further, forming the first solid-state electrolyte and the second solid-state electrolyte may involve using physical vapor deposition. For instance, the first solid-state electrolyte and the second solid-state electrolyte may be formed by positioning the substrate in a vacuum chamber facing a target of lithium phosphate (Li₃PO₄) and introducing nitrogen into the chamber, thereby forming a plasma facilitating deposition (*e.g.*, sputtering) of LiPON. The first solid-state electrolyte and the second solid-state electrolyte may be examined for layer quality, conductivity, and possible defects. The first solid-state electrolyte and the second solid-state electrolyte may be formed concurrently, serially, and/or in groups. The solid-state electrolytes may be formed in other manners as well.

The method 200A continues at block 212 with forming on the first side of the substrate a first anode and forming on the second side of the substrate a second anode. The first anode may be in electrical contact with the first anode current collector, where the first solid-state electrolyte is formed between the first anode and the first cathode. Further, the second anode may be in electrical contact with the second anode current collector, where the second solid-state electrolyte is formed between the second anode and the second cathode. The first anode and the second anode may, for example, take any of the forms described above for the first anode 112 and the second anode 122, respectively, in relation to Figures 1A and 1C.

In some embodiments, the first anode and the second anode may be formed of LiPON. Further, forming the first anode may involve, for example, depositing (*e.g*., sputtering) lithium on the first anode current collector and the first solid-state electrolyte. Yet further, forming the second anode may involve, for example, depositing (*e.g*., sputtering) lithium on the second anode current collector and the second solid-state electrolyte. The first anode and the second anode electrolyte may be formed concurrently, serially, and/or in groups. The first anode and the second anode may be formed in other manners as well.

In some embodiments, the method 200A may further include forming on the first side of the substrate a first protective and forming on the second side of the substrate a second protective coating. The first protective coating may substantially cover the first anode and the second protective coating may substantially cover the second anode. The first protective coating and the second protective coating may, for example, take any of the forms described above for the first protective coating 114 and the second protective coating 126 in relation to Figures 1B and 1C. In some embodiments, no protective coating may be formed.

### III. Example Methods of Forming an Interconnection

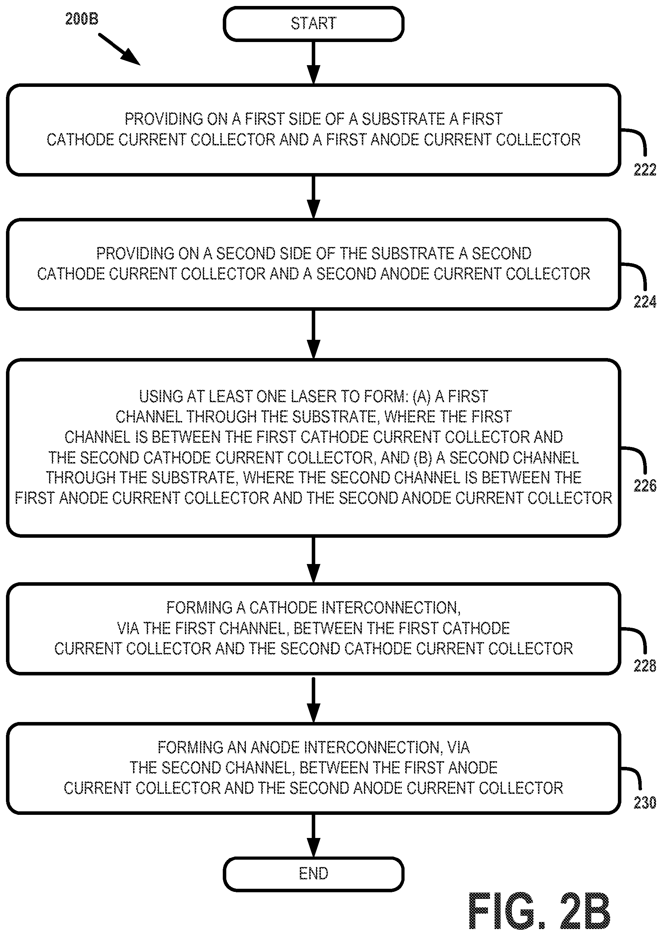

Figure 2B is a flowchart describing a method of forming an interconnection, in accordance with some embodiments. In some embodiments, the method 200B may be carried out in relation to the method 200A in Figure 2A. For example, the steps in the method 200A may be carried out and subsequently, the steps in the method 200B may be carried out. Further, one or more interconnections may be formed in a substrate, for example, as shown in the substrate 102 in Figure 1B, and additional steps of the method 200A may be carried for manufacturing the solid-state battery 100B. Yet further, the steps in the method 200A may overlap with the steps in method 200B, among other possibilities.

As shown, the method 200B begins at block 222 with providing on a first side of a substrate a first cathode current collector and a first anode current collector. The substrate may, for example, have a first side and a second side by taking any of the forms described above for the substrate 102 in Figures 1A through 1C and the second substrate 132 in Figure 1C. Further, the first cathode collector and the first anode current collector on the first side of the substrate may, for example, take any of the forms described above for the first cathode collector 104 and the first anode current collector 106 in Figures 1A through 1C.

The method 200B continues at block 224 with providing on a second side of the substrate a second cathode current collector and a second anode current collector. The second cathode current collector and the second anode current collector on the second side of the substrate may, for example, take any of the forms described above for the second cathode current collector 116 and the second anode current collector 118, respectively, in relation to Figures 1B and 1C.

The method 200B continues at block 226 with using at least one laser to form: (a) a first channel through the substrate, where the first channel is between the first cathode current collector and the second cathode current collector, and (b) a second channel through the substrate, where the second channel is between the first anode current collector and the second anode current collector.

In some embodiments, as illustrated in Figure 1B, the laser may be used to form the first channel 128c through the substrate 102, where the first channel 128c is between the first cathode current collector 104 and the second cathode current collector 116. Further, the laser may be used to form the second channel 130c through the substrate 102, where the second channel 130c is between the first anode current collector 106 and the second anode current collector 118.

In some embodiments, as illustrated in Figure 1C, the laser may be used to form the first channel 158a through the substrate 102, where the first channel 158a is between the first cathode current collector 104 and the second cathode current collector 116. Further, the laser may be used to form the second channel 160a through the substrate 102, where the second channel 130c is between the first anode current collector 106 and the second anode current collector 118. In some embodiments, as illustrated in Figure 1C, the laser may be used to form the first channel 158b through the second substrate 132, where the first channel 158b is between the third cathode current collector 134 and the fourth cathode current collector 146. Further, the laser may be used to form the second channel 160b through the second substrate 132, where the second channel 160b is between the third anode current collector 136 and the fourth anode current collector 148.

In some embodiments, as illustrated by Figure 1B, the laser may penetrate (*e.g.,* drill, puncture, perforate) and/or create a hole for the first channel 128c and the second channel 130c in the substrate 102. In some instances, the laser may penetrate through the substrate 102 prior to steps described above for block 224 and block 226 of method 200B in Figure 2B.

In some embodiments, as illustrated by Figure 1C, the laser may penetrate (*e.g*., drill, puncture, perforate) and/or create a hole for the first channel 158a and the second channel 160a in the substrate 102 of the first double-sided battery. Yet further, as illustrated in Figure 1C, the laser may penetrate and/or create a hole for the third channel 158b and the fourth channel 160b in the second substrate 132 of the second double-sided battery.

In some embodiments, as illustrated in Figure 1C, the laser may penetrate (*e.g*., drill, puncture, perforate) and/or create a hole for the first channel 158a in the first cathode current collector 104, the substrate 102, and the second cathode current collector 116. Further, the laser may penetrate and/or create a hole for the second channel 160a in the first anode current collector 106, the substrate 102, and the second anode current collector 118. In some embodiments, the laser may penetrate and/or create a hole for the third channel 158b in the third cathode current collector 134, the second substrate 132, and the fourth cathode current collector 146. Yet further, the laser may penetrate and/or create a hole for the fourth channel 160b in the third anode current collector 136, the second substrate 132, and the fourth anode current collector 148.

The method 200B continues at block 228 with forming a cathode interconnection, via the first channel, between the first cathode current collector and the second cathode current collector. The cathode interconnection may, for example, take any of the forms described above for the cathode interconnection 128, via the first channel 128c, between the first cathode current collector 104 and the second cathode current collector 116 in relation to Figure 1B.

Further, the cathode interconnection may, for example, take any of the forms described above for the cathode interconnection 158, via the first channel 158a, between the first cathode current collector 104 and the second cathode current collector 116 in relation to Figure 1C. Yet further, the cathode interconnection may, for example, take any of the forms described above for the cathode interconnection 158, via the third channel 158b, between the third cathode current collector 134 and the fourth cathode current collector 146 in relation to Figure 1C.

The method 200B continues at block 230 with forming an anode interconnection, via the second channel, between the first anode current collector and the second anode current collector. The anode interconnection may, for example, take any of the forms described above for the anode interconnection 130, via the second channel 130c, between the first anode current collector 106 and the second anode current collector 118 in relation to Figure 1B.

Further, the anode interconnection may, for example, take any of the forms described above for the anode interconnection 160, via the second channel 160a, between the first anode current collector 106 and the second anode current collector 118 in relation to Figure 1C. Yet further, the anode interconnection may, for example, take any of the forms described above for the anode interconnection 160, via the fourth channel 160b, between the third anode current collector 136 and the fourth anode current collector 148 in relation to Figure 1C.

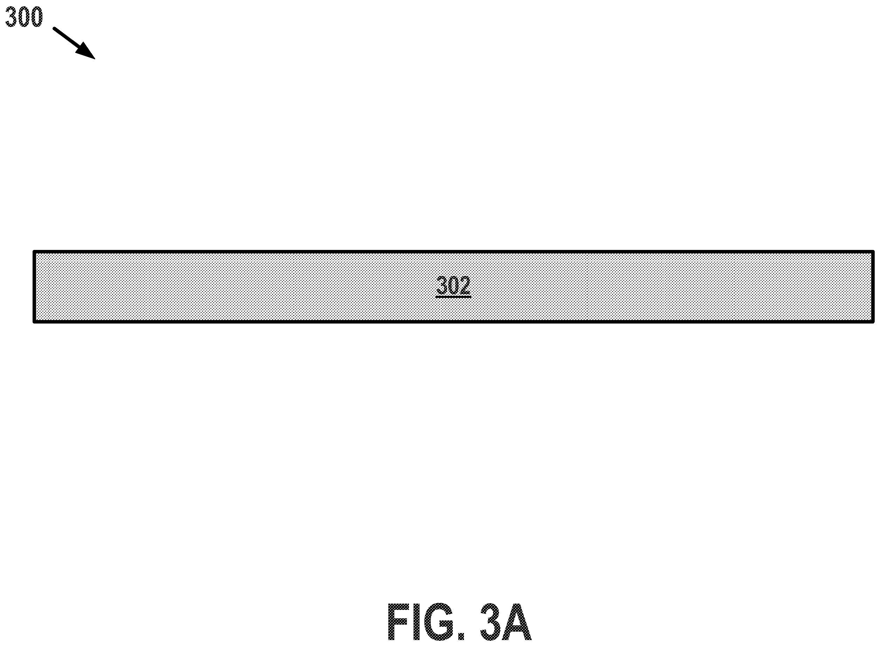

Figures 3A through 3F illustrate a method of manufacturing a solid-state battery, in accordance with some embodiments. Further, Figures 3A to 3F illustrate example side or cross-sectional views of manufacturing the solid-state battery 300. The method described for Figures 3A to 3F may correspond to, for example, the methods 200A and 200B described in relation to Figures 2A and 2B, respectively. In some embodiments, the solid-state battery 300 may be used to power a head-mountable device.

As shown in Figure 3A, a substrate 302 is provided. The substrate 302 may, for example, take any of the forms described above for the substrate 102 in relation to Figures 1A through 1C and the second substrate 132 in relation to Figure 1C. Further, the substrate 302 may be provided in any of the manners described above for block 202 of method 200A in Figure 2A, and blocks 222 and 224 of method 200B in Figure 2B.

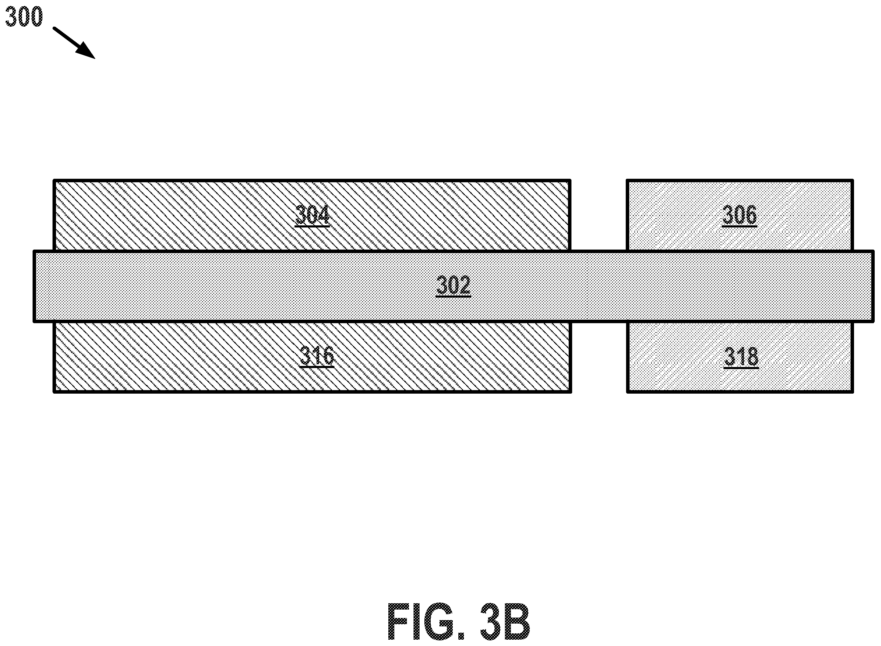

Figure 3B illustrates providing on a first side of the substrate 302 a first cathode current collector 304 and a first anode current collector 306. Further, Figure 3B illustrates providing on a second side of the substrate 302 a second cathode current collector 316 and a second anode current collector 318. The first cathode current collector 304, the first anode current collector 306, the second cathode current collector 316, and the second anode current collector 318 may take any of the forms described above for the first cathode current collector 104, the first anode current collector 106, the second cathode current collector 116, and the second anode current collector 118, in relation to Figures 1B and 1C.

Further, the first cathode current collector 304 and the first anode current collector 306 may be provided on the first side of substrate 302 in any manner described above for block 204 of method 200A in Figure 2A and block 222 of method 200B in Figure 2B. Further, the second cathode current collector 316 and the second anode current collector 318 may be provided on the second side of substrate 302 in any of the manners described above for block 204 of method 200A in Figure 2A and block 224 of method 200B in Figure 2B.

In some embodiments, the first cathode current collector 304, the second cathode current collector 316, the first anode current collector 306, and the second anode current collector 318 may be formed may be formed concurrently, serially, and/or in groups.

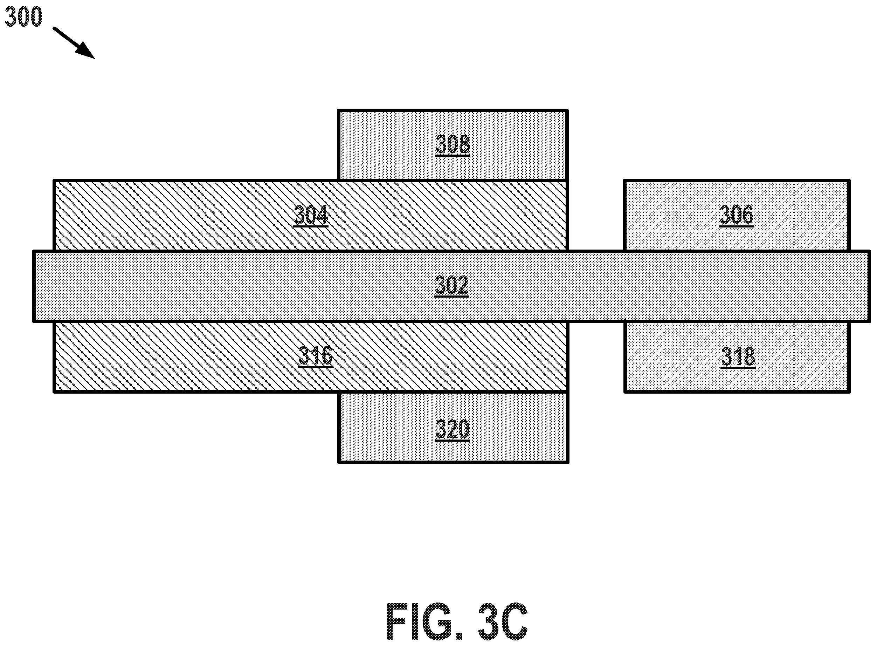

Figure 3C illustrates the forming of first cathode 308 and second cathode 320, where one or both may be made of LiCoO₂. As shown, the cathode 308 is in electrical contact with the cathode current collector 304. Further, the second cathode 320 is in electrical contact with the first cathode current collector 316. The first cathode 308 and the second cathode 320 may take any of the forms described above for the first cathode 108 and the second cathode 320 in relation to Figures 1A through 1C. Further, the first cathode 308 and the second cathode 320 may be provided in any of the manners described above for block 206 of method 200A in Figure 2A.

Additionally, the first cathode 308 and the second cathode 320 may be annealed (not shown) at a given temperature in any of the manners described above for block 208 of method 200A in Figure 2A. In some embodiments, the first cathode 308 and the second cathode 320 may be formed concurrently, serially, and/or in groups.

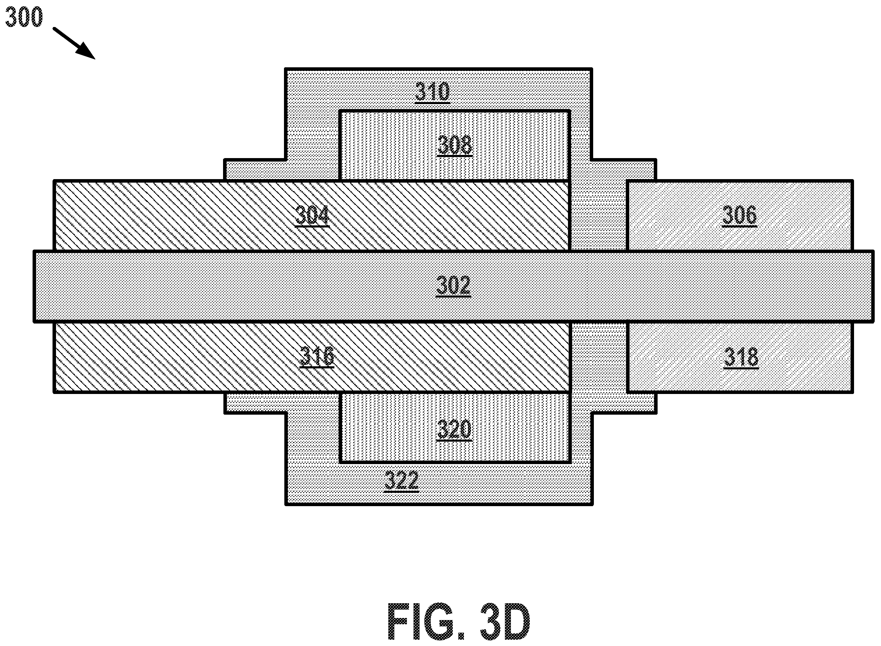

Figure 3D illustrates the forming of a first solid-state electrolyte 310 and a second solid-state electrolyte 322, where one or both may be made of LiPON. The first solid-state electrolyte 310 and the second solid-state electrolyte 322 may take any of the forms described above for the first solid-state electrolyte 110 and the second solid-state electrolyte 122, respectively, in relation to Figures 1A through 1C. Further, the first solid-state electrolyte 110 and the second solid-state electrolyte 122 may be formed in any of the manners described above for block 210 of method 200A in Figure 2A. In some embodiments, the first solid-state electrolyte 310 and the second solid-state electrolyte 322 may be formed concurrently, serially, and/or in groups.

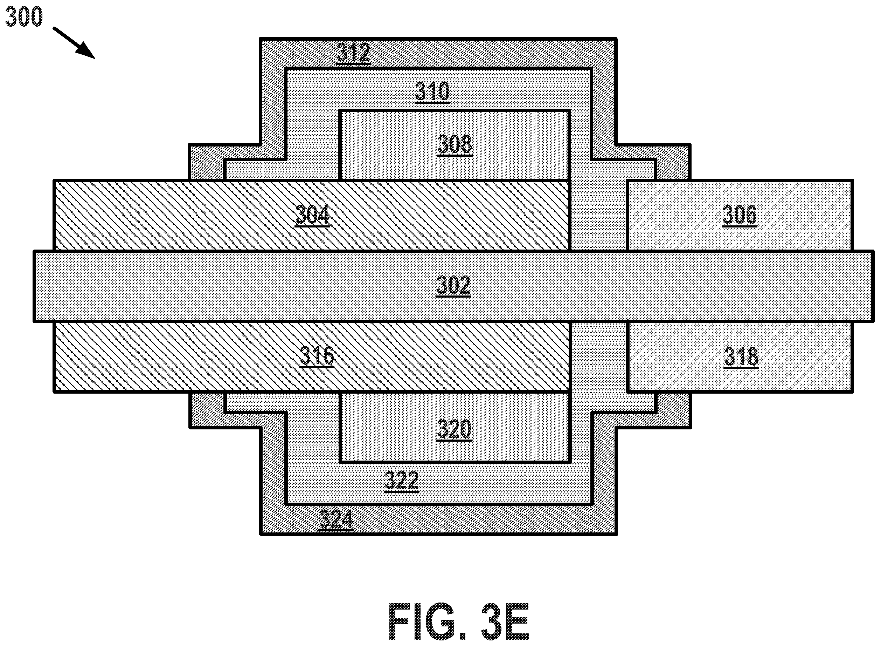

Figure 3E illustrates the forming of a first anode 312 and a second anode 324, where one or both may be made of lithium. As shown, the first anode 312 is in electrical contact with the first anode current collector 306 and the second anode 324 is in electrical contact with the second anode current collector 318. Additionally, as shown, the solid-state electrolyte 310 is formed between the first cathode 308 and the first anode 312. Further, as shown, the second solid-state electrolyte 322 is formed between the second cathode 320 and the second anode 324.

The first anode 312 and the second anode 324 may take any of the forms described above for the first anode 112 and the second anode 124, respectively, in relation to Figures 1A through 1C. Further, the first anode 312 and the second anode 324 may be formed in any of the manners described above for block 212 of method 200A in Figure 2A. In some embodiments, the first anode 312 and the second anode 324 may be formed concurrently, serially, and/or in groups.

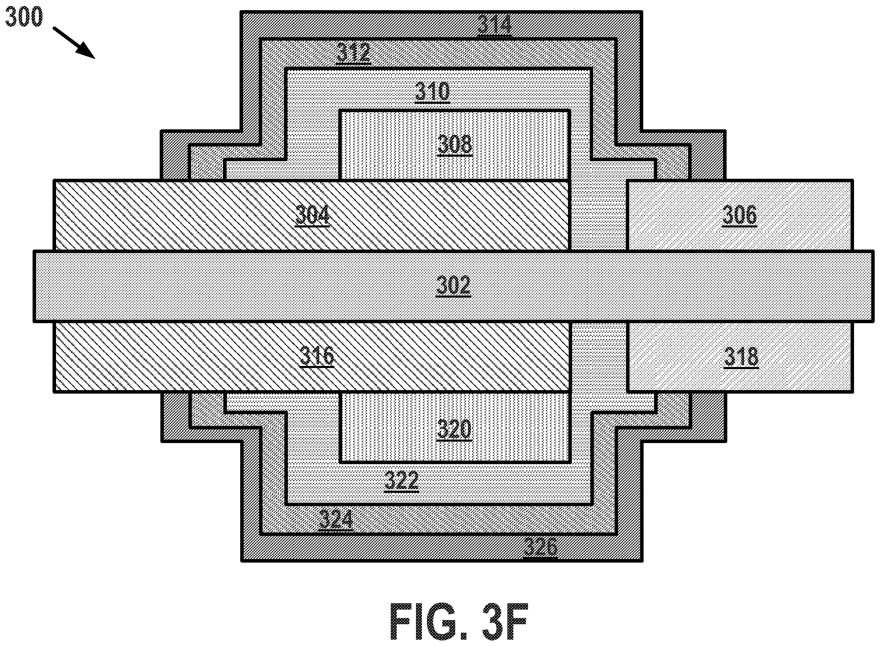

Figure 3F illustrates the forming of a first protective coating 314 and a second protective coating 324 that substantially covers the first anode 310 and the second anode 320, respectively. The first protective coating 314 and the second protective coating 326 may, for example, take any of the forms described above for the first protective coating 114 and the second protective coating 124 in relation to Figures 1A through 1C. In some embodiments, the first protective coating 314 and the second protective coating 326 may be formed concurrently, serially, and/or in groups. In some embodiments, no protective coatings 314 and 324 may be formed.

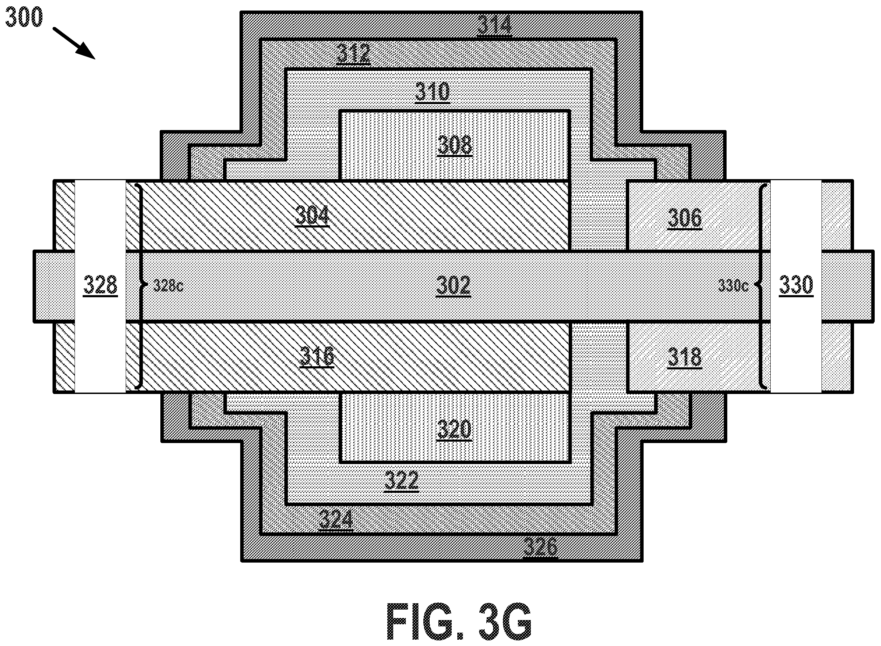

Figure 3G illustrates a first channel 328c formed by a laser. The first channel 328c extends through the substrate 302, where the first channel 328c is between the first cathode current collector 304 and the second cathode current collector 316. As shown, the first channel 328c goes through the first cathode collector 304, the substrate 302, and the second cathode current collector 316. In some embodiments, the first channel 328c may, for example, take any of the forms described above for the first channel 128c in Figure 1B, and the first channel 158a and the third channel 158b in Figure 1C. Further, the laser that forms the first channel 328 may be used in any of the manners described above for block 226 of method 200B in Figure 2B.

Further, Figure 3G illustrates a second channel 330c formed by a laser. The second channel 330c extends through the substrate 302, where the second channel 330c is between the first anode current collector 306 and the second anode current collector 318. As shown, the second channel 330c goes through the first anode current collector 306 and the second anode current collector 318. The second channel 330c may, for example, take any of the forms described above for the second channel 130c in Figure 1B, and the second channel 160a and the fourth channel 160b in Figure 1C. Further, the laser that forms the second channel 130c may be used in any of the manners described above for block 226 of method 200B in Figure 2B.

In some embodiments, the first channel 328c and the second channel 330c may be a hole or a space. Further, the first channel 328c and the second channel 330c may each have a diameter between about 152 µm and 360 µm, among other possibilities. In some embodiments, the first channel 328c and the second channel 330c may be formed concurrently, serially, and/or in groups. For example, the laser may be used to drill a hole or an area for the first channel 328c concurrently, serially, and/or in groups with other channels. In some embodiments, other mechanisms (*e.g*., mechanical drilling devices) may also be used to form the first channel 328c and the second channel 330c.

In some embodiments, the laser may be used form the second channel 330c separately for each part or component of the solid-state battery 300. For example, the laser may be used to form the first channel 328c and the second channel 330c for the substrate 302 separately from other parts of the solid-state battery 300. In some embodiments, the laser may be used to form the first channel 328c and the second channel 330c separately for the cathode current collector 304, the second cathode current collector 316, the first anode current collector 306, and the second anode current collector 318. In some embodiments, mechanisms (*e.g*., clamps, locks, immobilizers, fasteners, holders, and compressors) may prevent motion of the solid-state battery 300 during use of the laser on the solid-state battery 300. Further, each use of the laser may be inspected by a microscope.

Yet further, Figure 3G illustrates forming a cathode interconnection 328, via the first channel 328c, between the first cathode current collector 304 and the second cathode current collector 316. In addition, Figure 3G illustrates forming an anode interconnection 330, via the second channel 330c, between the first anode current collector 306 and the second anode current collector 318. The cathode interconnection 328 and the anode interconnection 330 may, for example, take any of the forms described above for the cathode interconnection 128 and the anode interconnection 130 in relation to Figure 1B, and the cathode interconnection 158 and the anode interconnection 160 in relation to Figure 1C. Further, the cathode interconnection 328 and the anode interconnection 330 may be formed in any of the manners described above for block 228 and 230, respectively, in relation to Figure 2B. In some embodiments, the cathode interconnection 328 and the anode interconnection 330 may be configured to connect the solid-state battery 300 to other solid-state batteries in parallel or in series.

In some embodiments, the cathode interconnection 328 may establish an electrical connection between the cathode current collector 304 and the second cathode current collector 316. Further, the anode interconnection 330 may establish an electrical connection between the anode current collector 306 and the second anode current collector 318. Additional interconnections (not shown in Figure 3G) may also establish electrical connections between the solid-state battery 300 and other solid-state batteries.

In some embodiments, the solid-state battery 300 may be aligned and stacked with other solid-state batteries. In some embodiments, the solid-state battery 300 may be aligned and stacked before using conductive materials to form the cathode interconnection 328 and the anode interconnection 330. The solid-state battery 300 may be aligned and stacked as a first double-sided battery on top of a second double-sided battery, as illustrated in Figure 1C. The solid-state battery 300 may also be aligned and stacked below one or more solid-state batteries. It should be noted that the solid-state battery 300 may also be connected to other solid-state batteries without stacking, possibly through other arrangements. In some embodiments, the solid-state battery 300 and possibly one or more other solid-state batteries stacked with solid-state battery 300 may be packaged or "pouched" in aluminum, among other possible pouches.

In some embodiments, conductive materials may be used to form the cathode interconnection 328 and the anode interconnection 330. In some embodiments, the conductive material may be used while the solid-state battery is aligned and stacked with other solid-state batteries, possibly with the mechanisms for preventing motion of the solid-state battery 300 as described above. Further, in some embodiments, the substrate 302 may be shorted from top to bottom (or front to back) while using the conductive materials to form the cathode interconnection 328 and the anode interconnection 330.

In some embodiments, forming the cathode interconnection 328 and the anode interconnection 330 may be involve filling the first channel 328c and the second channel 330c with silver, gold, copper, antimony, tin, or a combination thereof. In some embodiments, forming the cathode interconnection 328 and the anode interconnection 330 may involve inserting in the first channel 328c and the second channel 330c, respectively, conductive materials such as an ink, a paste, an epoxy, a wire, a cable, a connector, or a combination thereof.

In some embodiments, a wire may be placed in each of the first channel 328c and the second channel 330c and a conductive epoxy may be used to fill the first channel 328c and the second channel 330c. In some embodiments, a wire used to form the cathode interconnection 328 and the anode interconnection 330 may have a diameter or thickness of about 152 µm. In some instances, the wire-to-cell resistance may range from about 0.6 to 1.3 Ohms (Ω). Further, the wire-to-cell resistance may vary depending on the number of solid-state batteries in a stack. For example, a stack of three solid-state batteries may have a resistance of about 0.7 to 1.1 Ohms and a stack of five may have a resistance of about 0.6 to 1.3 Ohms.

### IV. Examples Aspects of Forming an Interconnection

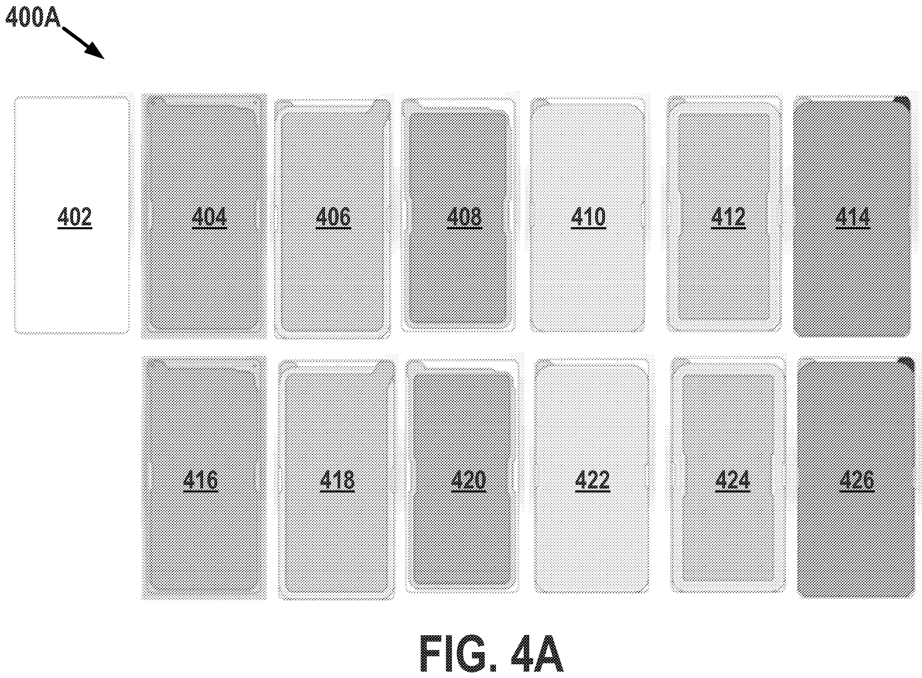

Figures 4A through 4C illustrate aspects of forming an interconnection in solid-state batteries, in accordance with some embodiments. The solid-state battery 400A may take any of the forms described above for the solid-state battery 300 in relation to Figures 3A through 3G. Figure 4A illustrates an example birds-eye or top view of various components to the solid-state battery 400A. Further, the methods described for Figures 4A through 4C may be carried out in any manner described in the method 200B of Figure 2B.

As shown, the substrate 402, the first cathode current collector 404, the first anode current collector 406, the first cathode 408, the first solid-state electrolyte 410, the first anode 412, and the first protective coating 414 of solid-state battery 400 may take any of the forms described above for the substrate 302, the first cathode current collector 304, the first anode current collector 306, the first cathode 308, the first solid-state electrolyte 310, the first anode 312, and the first protective coating 314 of solid-state battery 300, respectively, in relation to Figures 3A through 3G.

Further, as shown, the second cathode current collector 416, the second anode current collector 418, the second cathode 420, the second solid-state electrolyte 422, the second anode 424, and the second protective coating 426 may take any of the forms described above for the second cathode current collector 316, the second anode current collector 318, the second cathode 320, the second solid-state electrolyte 322, the second anode 324, and the second protective coating 326, respectively, in relation to Figures 3A through 3G.

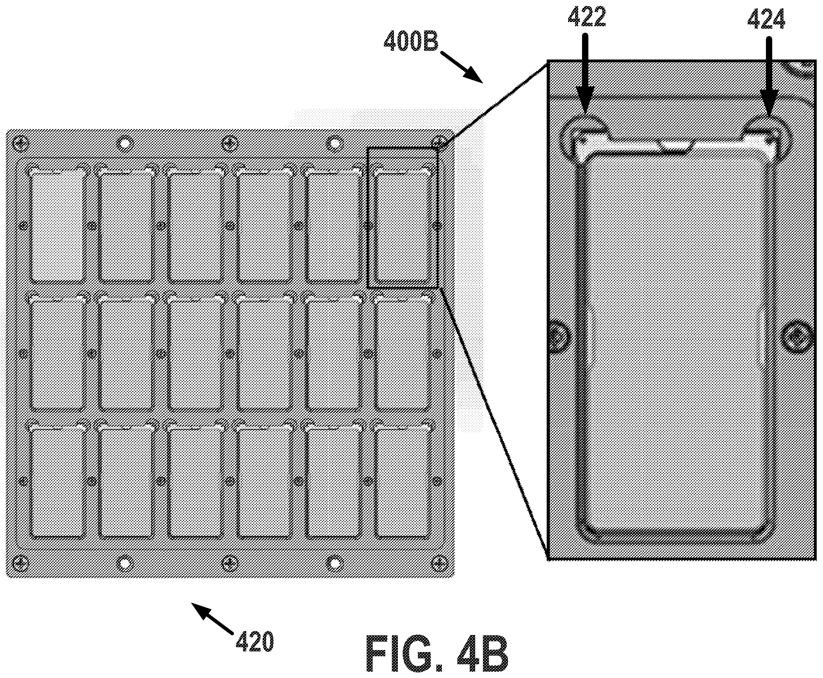

Figure 4B illustrates a fixture 420 for supporting solid-state battery 400B. In some embodiments, on a first side of the substrate 402, the solid-state battery 400B may be formed with the first cathode current collector 404, the first anode current collector 406, the first cathode 408, the first solid-state electrolyte 410, the first anode 412, and the first protective coating 414, as described above in relation to Figure 4A. Further, on a second side of the substrate 402, the solid-state battery 400B may be formed with the second cathode current collector 416, the second anode current collector 418, the second cathode 420, the second solid-state electrolyte 422, the second anode 424, and the second protective coating 426 as described above in relation to Figure 4A. In some embodiments, the solid-state battery 400B may be manufactured in accordance with the method 200A of Figure 2A and/or the method 200B of Figure 2B.

In some embodiments, a laser may be to form a first channel through the substrate 402, where the first channel is between the first cathode current collector 404 and the second cathode current collector 416. Further, a laser may be used to form a second channel through the substrate 402, where the second channel is between the first anode current collector 406 and the second anode current collector 418. In some embodiments, the first channel and the second channel of the solid-state battery 400B may, for example, take any of the forms as described above for the first channel 328c and the second channel 330c, respectively, in Figure 3G. Further, the laser may be used in any manner described above for block 226 of method 200B in Figure 2B.

In some embodiments, the fixture 420 may provide support for the solid-state battery 400B for using a laser on the solid-state battery 400B. As illustrated in Figure 4B, the fixture 420 may support several other solid-state batteries. Further, the fixture 420 may include spaces 422 and 424 to expose areas of the solid-state battery 400B, possibly for using the laser on these areas of the solid-state battery 400B. For example, spaces 422 and 424 may expose corners of the solid-state battery 400B. In some instances, other portions of the solid-state battery 400B may be exposed as well. As such, the fixture 420 may fully support the bottom surface of solid-state battery 400B while applying the laser through spaces 422 and 424 on to the solid-state battery 400B.

It should also be understood that the fixture 420 may include additional support (*e.g*., clamps, locks, immobilizers, fasteners, holders, and compressors) for preventing motion of the solid-state battery 400B while using the laser on the solid-state battery 400B. As illustrated in Figure 4B, the fixture 420 may provide support for multiple solid-state batteries for using a laser on the other solid-state batteries concurrently, serially, and/or in groups.

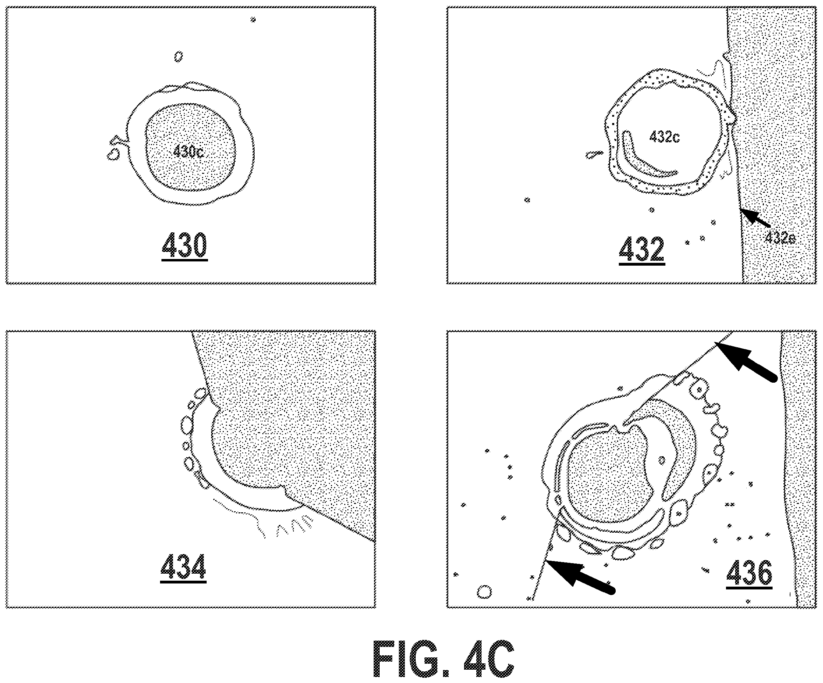

Figure 4C illustrates substrates with channels formed by a laser. In some embodiments, the substrates 430, 432, 434, and 436 may, for example, take any of the forms described above for the substrate 402 in Figure 4A. Further, the substrates 430, 432, 434, and 436 may, for example, be provided in any of the manners described above for block 202 of method 200A in Figure 2A, and blocks 222 and 224 of method 200B in Figure 2B. In some embodiments, the substrates 430, 432, 434, and 436 may illustrate channels formed by a laser in accordance with block 226 of method 200B in Figure 2B.

As shown in Figure 4C, the substrate 430 illustrates a channel 430c formed by a laser. Further, the channel 430c of the substrate 430 may form an interconnection. In addition, the channel 432c of the substrate 432 may be formed too close to the edge 432e of the substrate 432 and the center of the channel 432c may not be clear, possibly requiring additional work on the substrate 432 to form an interconnection. Further, possibly due to uses of the laser, the substrate 434 illustrates a portion of the substrate 434 that broke away from the substrate 434. Yet further, the laser may cause the substrate to break or crack, as illustrated by the two arrows pointing to cracks in the substrate 436.

In some embodiments, the laser used to form a first channel and a second channel may have certain characteristics. Further, using the laser may include measuring characteristics of the laser, possibly to avoid breaking substrates. For example, the characteristics laser may include the current and the frequency of the laser. Further, these characteristics may be adjusted to form channels, as illustrated in the substrate 430. In some embodiments, the characteristics of the laser may include currents in the range of about 19 amperes to 31 amperes. Further, the characteristics of the laser may include frequency rates between about 14 kHz and 150 kHz. In some embodiments, variations of currents and frequency may be used. For example, six different currents in the range of about 19 amperes to 29 amperes may be used in combination with six different frequency rates of about 15, 30, 50, 75, 100, and 150 kHz.

In some embodiments, varying the current and the frequency of the laser may increase the yield or success rate of forming channels as illustrated in the substrate 430. For example, using a current of about 19 amperes with a frequency rate of 15 kHz may yield, for example, a 20% rate. Further, a current of about 23 amperes with a frequency rate of 150 kHz may yield, for example, a 46% rate.

### V. Example Methods for Manufacturing a Number of Solid-State Batteries

In some applications, it may be desirable to manufacture a number of solid-state batteries in a single manufacturing process, rather than individually manufacturing solid-state batteries. To this end, the disclosed solid-state batteries may be manufactured using a roll-to-roll manufacturing process, in which a flexible roll including a number of substrates is patterned (*e.g*., using lithography and/or inkjet printing) and/or adhered to one or more other rolls to form a solid-state battery from each of the number of substrates. The number of substrates may then be separated from one another to produce a number of solid-state batteries.

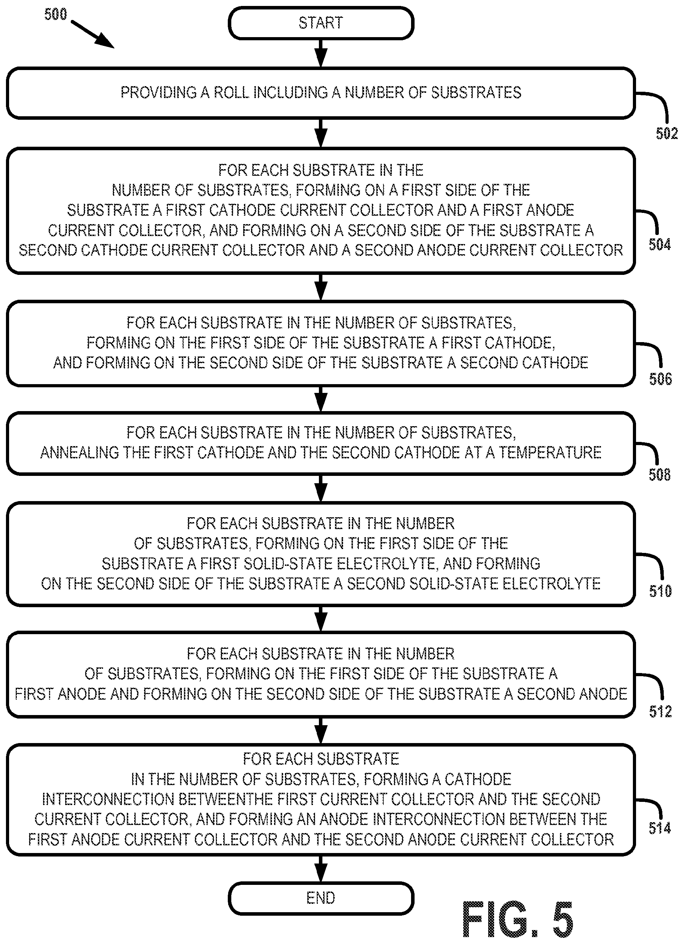

Figure 5 is a flowchart describing a method 500 of manufacturing a number of solid-state batteries, in accordance with some embodiments. As shown, the method 500 begins at block 502 with providing a roll including a number of substrates. The roll may take any number of dimensions. In some embodiments, the roll may have a thickness between, for example, about 25 µm and about 40 µm. Other thicknesses are possible as well. Further, in some embodiments, the roll may have a planar length and/or planar width on the order of meters. The dimensions of the roll, including, for example, the planar area and the thickness of the roll, may vary by the application of the solid-state batteries to be manufactured.

The roll may take any of the forms described above for the substrate 402 in relation to Figures 4A to 4C. For example, in some embodiments, the roll may be formed of glass, semiconductors, mica, a non-conducting material, and/or possibly a layer of yttria-stabilized zirconia (YSZ). In these embodiments, each substrate in the number of substrates may be formed by a region of the roll. As another example, in some embodiments, the roll may be a layer of YSZ attached to a layer of a metal or ceramic. In these embodiments, each substrate in the number of substrates may be formed by a region of the roll. The roll may take other forms as well. Any number of substrates may be included in the roll, and the substrates may be arranged in any pattern.

The method 500 continues at block 504 with, for each substrate in the number of substrates, forming on a first side of the substrate a first cathode current collector and a first anode current collector, and forming on a second side of the substrate a second cathode current collector and a second anode current collector. The first cathode current collector, the second cathode current collector, the first anode current collector, and the second anode current collector may, for example, take any of the forms described above for the first cathode current collector 404, the second cathode current collector 416, the first anode current collector 406, and the second anode current collector 418, respectively, in Figure 4A.

Each cathode current collector and anode current collector may be provided in any of the manners described above for block 204 in relation to Figure 2A, and blocks 222 and 224 in relation to Figure 2B. In some embodiments, each cathode current collector and anode current collector may be formed through patterning (e.g., lithography and/or inkjet printing) and/or may be preformed on an additional roll that is rolled over and adhered to the roll including the substrates. The cathode current collectors and anode current collectors may be formed in other manners as well. The cathode current collectors and anode current collectors may be formed concurrently, serially, and/or in groups.

The method 500 continues at block 506 with, for each substrate in the number of substrates, forming on the first side of the substrate a first cathode and forming on the second side of the substrate a second cathode. The first cathode and the second cathode may be composed of LiCoO₂, where the first cathode is in electrical contact with the first cathode current collector, and where the second cathode is in electrical contact with the second cathode current collector. Each cathode may take any of the forms described above for the first cathode 408 and the second cathode 420 in relation to Figure 4A. Further, each cathode may be formed in any of the manners described above for block 206 in relation to Figure 2A. Alternatively, each cathode may be formed through patterning (e.g., lithography and/or inkjet printing) and/or may be preformed on an additional roll that is rolled over and adhered to the roll including the substrates. The cathodes may be formed in other manners as well. The cathodes may be formed concurrently, serially, and/or in groups.

The method 500 continues at block 508 with, for each substrate in the number of substrates, annealing the first cathode and the second cathode at a temperature between about 700°C and about 800°C. Each cathode may be annealed in any of the manners described above for block 208 of method 200A in Figure 2. The cathodes may be annealed concurrently, serially, and/or in groups.

The method 500 continues at block 510 with, for each substrate in the number of substrates, forming a first solid-state electrolyte and a second solid-state electrolyte. The first solid-state electrolyte and the second solid-state electrolyte may be composed of LiPON. Each solid-state electrolyte may take any of the forms described above for the first solid-state electrolyte 410 and the second solid-state electrolyte 422 in relation to Figure 4A. Further, each solid-state electrolyte may be formed in any of the manners described above for block 210 of method 200A in Figure 2A. Alternatively, each solid-state electrolyte may be formed through patterning (e.g., lithography and/or inkjet printing) and/or may be preformed on an additional roll that is rolled over and adhered to the roll including the substrates. The solid-state electrolytes may be formed in other manners as well. The solid-state electrolytes may be formed concurrently, serially, and/or in groups.

The method 500 continues at block 512 with, for each substrate in the number of substrates, forming on the first side of the substrate a first anode and forming on the second side of the substrate a second anode. The first anode and the second anode may be composed of lithium. The first anode may be in electrical contact with the first anode current collector and the first solid-state electrolyte may be formed between the first anode and the first cathode. The second anode may be in electrical contact with the second anode current collector and the second solid-state electrolyte may be formed between the second anode and the second cathode.

Each anode may take any of the forms described above for the first anode 412 and the second anode 424 in relation to Figure 4A. Further, each anode may be formed in any of the manners described above for block 212 in relation to Figure 2A. Alternatively, each anode may be formed through patterning (e.g., lithography and/or inkjet printing) and/or may be preformed on an additional roll that is rolled over and adhered to the roll including the substrates. The cathodes may be formed in other manners as well. The anodes may be formed concurrently, serially, and/or in groups.

The method 500 continues at block 514, for each substrate in the number of substrates, forming a cathode interconnection between the first current collector and the second current collector, and forming an anode interconnection between the first anode current collector and the second anode current collector. Each cathode interconnection and anode interconnection may take any of the forms described above for the cathode interconnection 328 and the anode interconnection 330 in Figure 3G. Further, each cathode interconnection and anode interconnection may be formed in any of the manner described above for method 200B of Figure 2B.

In some embodiments, a laser may be used to form a first channel through the substrate, where the first channel is between the first cathode current collector and the second cathode current collector. Further, the laser may also be used to form a second channel through the substrate, where the second channel is between the first anode current collector and the second anode current collector. In some embodiments, the laser may, for example, be used in any manner as described above for Figures 4A through 4C.

In some embodiments, using the laser to form the first channel through the substrate includes penetrating through the first cathode current collector, the substrate, and the second cathode current collector. Further, using the laser to form the second channel through the substrate comprises penetrating through the first anode current collector, the substrate, and the second anode current collector.

In some embodiments, the method 500 may further include, for each substrate in the number of substrates, forming a first protective coating substantially covering the first anode and forming a second protective coating substantially covering the second anode. The first protective coating and the second protective coating may, for example, take any of the forms described above for the first protective coating 414 and the second protective coating 426, respectively, in relation to Figure 4A. In some embodiments, each protective coating may be formed through patterning (e.g., lithography and/or inkjet printing) and/or may be preformed on an additional roll that is rolled over and adhered to the roll including the substrates. The protective coatings may be formed in other manners as well. The protective coatings may be formed concurrently, serially, and/or in groups. Alternatively, in some embodiments, no protective coating may be formed.

In some embodiments, the method 500 may further include separating each of the substrates in the number of substrates from one another, thereby forming a number of solid-state batteries. Each solid-state battery may include a respective substrate. The substrates may be separated using, for example, die cutting and/or laser cutting. The substrates may be separated in other manners as well.

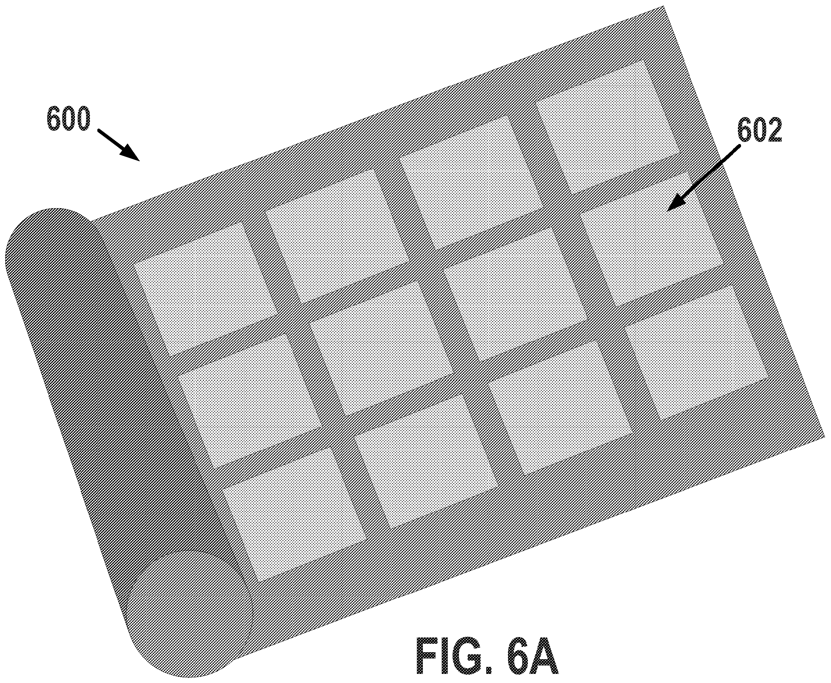

Figures 6A through 6C illustrate a method of manufacturing a number of solid-state batteries. In some embodiments, each solid-state battery may include a substrate composed of glass, semiconductors, mica, a non-conducting material, and/or possibly a layer of yttria-stabilized zirconia (YSZ), in accordance with some embodiments. The method may be, for example, the method 500 described above in relation to Figure 5.

As shown in Figure 6A, a roll 500 may be provided that includes a number of substrates 602. In some embodiments, the roll 600 may be formed of glass, semiconductors, mica, a non-conducting material, and/or possibly a layer of YSZ. In these embodiments, each substrate in the number of substrates 602 may be formed by a region of the roll 600. As another example, in some embodiments, the roll 600 may be a layer of YSZ attached to a layer of a metal or ceramic. In these embodiments, each substrate in the number of substrates 602 may be formed by a region of the roll 600. The roll 600 may take other forms as well. Any number of substrates may be included in the roll 600, and the substrates may be arranged in any pattern.

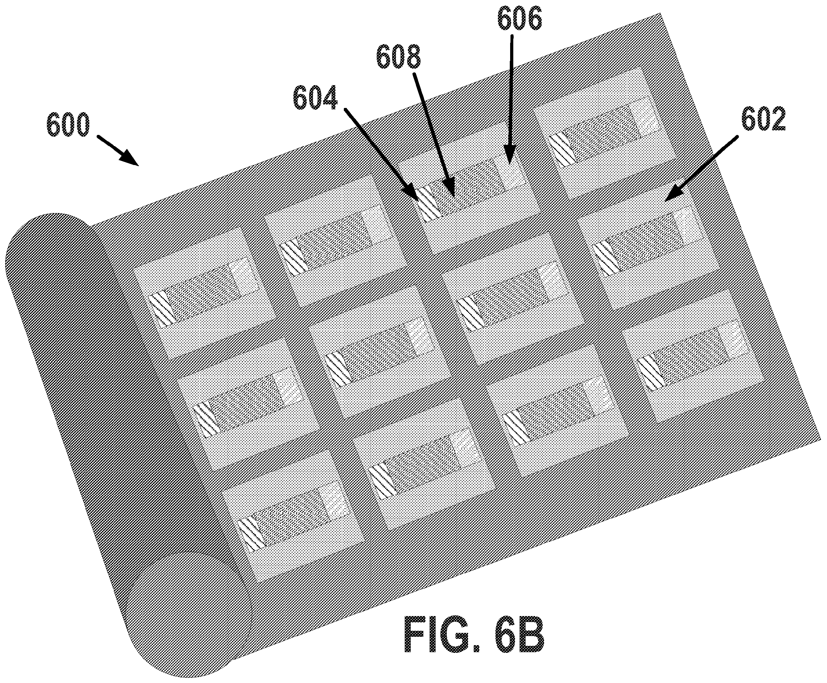

As shown in Figure 6B, a solid-state battery may be formed on each substrate in the number of substrates 602. In particular, for each substrate, a first cathode current collector 604, a first anode current collector 606, a first cathode (not visible from the top view), a first solid-state electrolyte (not visible from the top view), and a first anode 608 may be formed. In addition, for each substrate, a second cathode current collector, a second anode current collector, a second cathode, a second solid-state electrolyte, and a second anode may be formed (all not visible from the top view).

Each of the first cathode current collector 604, the first anode current collector 606, the first cathode, the first solid-state electrolyte, and the first anode 608 may take any of the forms described above for the first cathode current collector 404, the first anode current collector 406, the first cathode 408, the first solid-state electrolyte 410, and the first anode 412, respectively, in relation to Figure 4A. Further, each of the second cathode current collector, the second anode current collector, the second cathode, the second solid-state electrolyte, and the second anode may take any of the forms described above for the second cathode current collector 416, the second anode current collector 418, the second cathode 420, the second solid-state electrolyte 422, and the second anode 424, respectively, in relation to Figure 4A.

Further, each of the first cathode current collector 604, the second cathode current collector, the first anode current collector 606, and the second anode current collector may be formed in any of the manners described above for block 504 in relation to Figure 5. Moreover, each of the first cathode, the second cathode, the first solid-state electrolyte, the second solid-state electrolyte, the first anode 608, and the second anode may be formed in any of the manners described above for blocks 506, 510, and 512, respectively, in relation to Figure 5.

One or more of the first cathode current collector 604, the second cathode current collector, the first anode current collector 606, the second anode current collector, the first cathode, the second cathode, the first solid-state electrolyte, the second solid-state electrolyte, the first anode 608, and the second anode may be formed during the same manufacturing step, or each may be formed during a separate manufacturing step.

Further, for each substrate, a cathode interconnection may be formed for the first cathode current collector 604 and the second cathode current collector. Yet further, an anode interconnection may be formed for the first anode current collector 608 and the second anode current collector. The cathode interconnection and the anode interconnection may be formed in any of the manners described above for block 514 in relation to Figure 5.

In some embodiments, protective coatings (not shown) may additionally be formed that substantially covers each of the first anodes 608 and the second anodes. The protective coating may, for example, take any of the forms described above for the first protective coating 414 and the second protective coating 426 in relation to Figure 4A. In other embodiments, such as that shown, no protective coating may be formed.

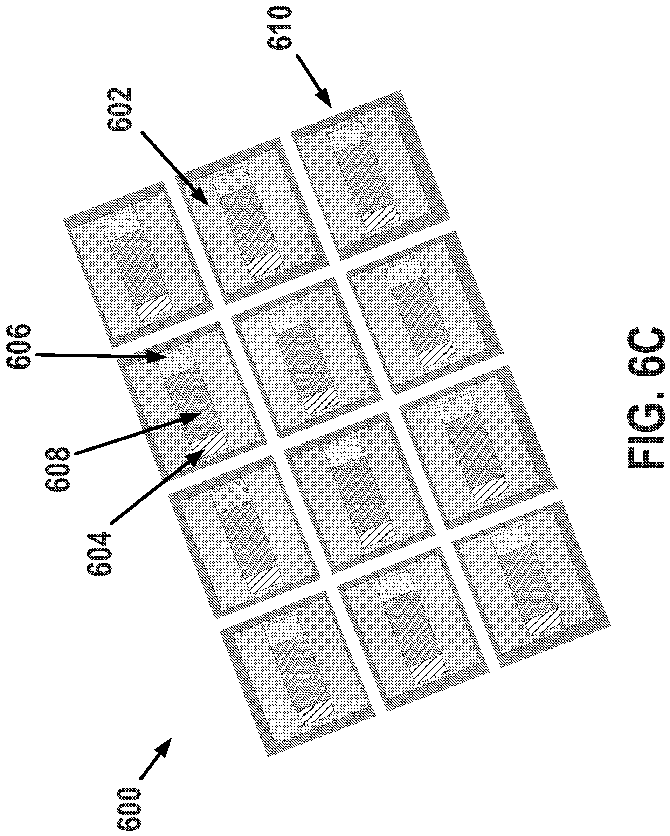

In any case, each first cathode current collector 604, second cathode current collector, first anode current collector 606, second anode current collector, first cathode, second cathode, first solid-state electrolyte, second solid-state electrolyte, first anode 608, and second anode, together with the substrate on which they are formed, may form a solid-state battery. The solid-state batteries may then be separated, as shown in Figure 6C. Each of the solid-state batteries 610 may include a respective substrate. The solid-state batteries 610 may be separated using, for example, die cutting and/or laser cutting. The solid-state batteries 610 may be separated in other manners as well.

While the solid-state batteries 610 in Figure 6C are shown from a top view, each solid-state battery may appear from a side or cross-sectional view to be similar to the solid-state battery 300 described above in relation to Figures 3A through 3G. (While the solid-state battery 300 in Figure 3G is shown to include a first protective coating 314 and a second protective coating 326, each of the solid-state batteries 610 may or may not include a protective coating, as described above.)

### VI. Example Substrates for a Solid-State Battery

In some instances, solid-state batteries formed on substrate materials may exhibit limited energy densities on the order of approximately 97-150 Wh/L. These limited energy densities are the result of a number of factors. In some embodiments, the energy densities of solid-state batteries formed on copper, stainless steel, and polyimide substrates may be limited by the mismatch between the coefficients of thermal expansion (CTEs) of the substrate materials and the CTE of LiCoO₂, which limits the thickness of the LiCoO₂ cathode that can be grown on each of these substrates. Growth of LiCoO₂ at greater thicknesses on these substrates results in cracking and peeling off of the LiCoO₂.

In some embodiments, the energy densities are limited by the annealing temperature that may be used during manufacture of the solid-state battery. To optimize the crystallization and crystal orientation of a lithium cobalt oxide (LiCoO₂) cathode (and, accordingly, the energy density of the solid-state battery), it may be desirable to anneal the LiCoO₂ cathode at a temperature between about 700°C and about 800°C. Additionally, the solid-state battery can have an energy density of 100 Wh/L.

However, polyimide substrates cannot withstand such high annealing temperatures; rather, polyimide is limited to an annealing temperature of approximately 400°C. Copper can withstand annealing temperatures of approximately 700-800°C, but with the result that the copper will oxidize during annealing. Further, while stainless steel can similarly withstand an annealing temperature of approximately 700-800°C, during annealing at such temperatures alloying elements in the stainless steel (e.g., chromium) migrate into the LiCoO₂ cathode, thereby reducing the cycle life of the solid-state battery.

In some embodiments, yttria-stabilized zirconia (YSZ) can withstand high annealing temperatures between about 700°C and about 800°C, allowing for desirable annealing of LiCoO₂. Additionally, YSZ has a near-zero coefficient of thermal expansion at approximately 800°C, allowing for the growth of thicker layers of LiCoO2 without cracking or peeling of the LiCoO₂. As a result, solid-state batteries having a YSZ substrate may exhibit an improved energy density of approximately 1030 Wh/L.

The substrate is a stand-alone layer of YSZ. The cathode current collector and the anode current collector may then be formed on the YSZ. A molar concentration of yttria in the YSZ of a substrate may vary by application. In some embodiments, the molar concentration of yttria in the YSZ may be, for example, approximately 3%. Other molar concentrations of yttria are possible as well.

### VII. Conclusion

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A battery (100B, 300, 400A, 400B, 610) comprising:
a substrate (102, 302, 402, 602), wherein the substrate (102, 302, 402, 602) is a stand-alone layer of yttria-stabilized zirconia, YSZ, having a first side and a second side, wherein a first cathode current collector (104, 304, 404, 604) and a first anode current collector (106, 306, 406, 606) are on the first side of the substrate, and wherein a second cathode current collector (116, 316, 416) and a second anode current collector (118, 318, 418) are on the second side of the substrate;
a first channel (128c, 328c, 158a, 158b, 158) through the substrate between the first cathode current collector and the second cathode current collector;
a second channel (130c, 330c, 160a, 160b, 160) through the substrate between the first anode current collector and the second anode current collector;
a cathode interconnection (128, 328), via the first channel, between the first cathode current collector and the second cathode current collector; and
an anode interconnection (130, 330), via the second channel, between the first anode current collector and the second anode current collector.

2. The battery (100B, 300, 400A, 400B, 610) of claim 1, wherein at least one of the first channel (128c, 328c, 158a, 158b, 158) and the second channel (130c, 330c, 160a, 160b, 160) is formed by a laser.

3. The battery (100B, 300, 400A, 400B, 610) of claim 1, wherein the first channel (128c, 328c, 158a, 158b, 158) is located in a first corner of the substrate (102, 302, 402, 602), and wherein the second channel (130c, 330c, 160a, 160b, 160) is located in a second corner of the substrate adjacent to the first corner of the substrate.

4. The battery (100B, 300, 400A, 400B, 610) of claim 1, wherein at least one of the cathode interconnection (128, 328) and the anode interconnection (130, 330) comprises one or more of the following: (a) silver, (b) gold, (c) copper, (d) antimony, and (e) tin.

5. The battery (100B, 300, 400A, 400B, 610) of claim 1, wherein at least one of the cathode interconnection (128, 328) and the anode interconnection (130, 330) comprises one or more of the following conductive materials: (a) an ink, (b) a paste, (c) an epoxy, (d) a wire, (e) a cable, and (f) a connector.

6. A method (200B) of manufacturing a battery comprising:
providing on a first side of a substrate a first cathode current collector and a first anode current collector (222);
providing on a second side of the substrate a second cathode current collector and a second anode current collector (224);
using at least one laser to form: (a) a first channel through the substrate, wherein the first channel is between the first cathode current collector and the second cathode current collector, and (b) a second channel through the substrate, wherein the second channel is between the first anode current collector and the second anode current collector (226);
forming a cathode interconnection, via the first channel, between the first cathode current collector and the second cathode current collector (228); and
forming an anode interconnection (230), via the second channel, between the first anode current collector and the second anode current collector;
wherein the substrate is a stand-alone layer of yttria-stabilized zirconia, YSZ.

7. The method (200B) of claim 6, wherein using the at least one laser to form the first channel through the substrate comprises penetrating through the first cathode current collector, the substrate, and the second cathode current collector, and wherein using the at least one laser to form the second channel through the substrate comprises penetrating through the first anode current collector, the substrate, and the second anode current collector.

8. The method (200B) of claim 6, wherein characteristics of the at least one laser comprises at least one of the following: (a) a current between 19 and 31 amperes and (b) a frequency between 15 and 150 kHz.

9. The method (200B) of any of claims 6 to 8, wherein using the at least one laser to form the first channel through the substrate and the second channel through the substrate comprises using the at least one laser without breaking the substrate.

10. The method (200B) of claim 9, wherein using the at least one laser without breaking the substrate comprises supporting the substrate with a fixture, and wherein the fixture comprises a plurality of openings for the at least one laser to penetrate the substrate.

11. The method (200B) of claim 6, wherein the method further comprises one or more of (a) aligning the battery with one or more batteries and (b) stacking the battery with the one or more batteries.

12. The method (200B) of claim 6, wherein the method further comprises:
forming a first cathode and a second cathode, wherein the first cathode is in electrical contact with the first cathode current collector, and wherein the second cathode is in electrical contact with the second cathode current collector; and
annealing the first cathode and the second cathode.

13. The method (200B) of claim 12, wherein the method further comprises:
forming a first solid-state electrolyte and a second solid-state electrolyte,
wherein the first solid-state electrolyte is between the first cathode and the first anode, and wherein the second solid-state electrolyte is between the second cathode and the second anode; and forming a first anode and a second anode, wherein the first anode is in electrical contact with the first anode current collector, and wherein the second anode is in electrical contact with the second anode current collector.

14. The method (200B) of claim 6, wherein forming the cathode interconnection and forming the anode interconnection comprises filling the first channel and the second channel, respectively, with one or more of the following: (a) silver, (b) gold, (c) copper, (d) antimony, and (e) tin.

15. A method (500) comprising:
providing a roll comprising a plurality of substrates (502), wherein each of the plurality of substrates is a stand-alone layer of yttria-stabilized zirconia, YSZ, wherein for each substrate in the plurality of substrates:
forming on a first side of the substrate a first cathode current collector and a first anode current collector, and forming on a second side of the substrate a second cathode current collector and a second anode current collector (504);
forming on the first side of the substrate a first cathode, and forming on the second side of the substrate a second cathode (506);
annealing the first cathode and the second cathode at a temperature (508);
forming on the first side of the substrate a first solid-state electrolyte, and forming on the second side of the substrate a second solid-state electrolyte (510);
forming on the first side of the substrate a first anode, and forming on the second side of the substrate a second anode (512); and
forming a cathode interconnection between the first cathode current collector and the second cathode current collector, and forming an anode interconnection between the first anode current collector and the second anode current collector (514).

## Patentansprüche

1. Batterie (100B, 300, 400A, 400B, 610), umfassend:
ein Substrat (102, 302, 402, 602), wobei das Substrat (102, 302, 402, 602) eine eigenständige Schicht aus yttriumoxidstabilisiertem Zirkonoxid, YSZ, mit einer ersten Seite und einer zweiten Seite ist, wobei ein erster Kathodenstromkollektor (104, 304, 404, 604) und ein erster Anodenstromkollektor (106, 306, 406, 606) auf der ersten Seite des Substrats liegen und wobei ein zweiter Kathodenstromkollektor (116, 316, 416) und ein zweiter Anodenstromkollektor (118, 318, 418) auf der zweiten Seite des Substrats liegen;
einen ersten Kanal (128c, 328c, 158a, 158b, 158) durch das Substrat zwischen dem ersten Kathodenstromkollektor und dem zweiten Kathodenstromkollektor;
einen zweiten Kanal (130c, 330c, 160a, 160b, 160) durch das Substrat zwischen dem ersten Anodenstromkollektor und dem zweiten Anodenstromkollektor;
eine Kathodenverbindung (128, 328) über den ersten Kanal zwischen dem ersten Kathodenstromkollektor und dem zweiten Kathodenstromkollektor; und
eine Anodenverbindung (130, 330) über den zweiten Kanal zwischen dem ersten Anodenstromkollektor und dem zweiten Anodenstromkollektor.

2. Batterie (100B, 300, 400A, 400B, 610) nach Anspruch 1, wobei mindestens einer von dem ersten Kanal (128c, 328c, 158a, 158b, 158) und dem zweiten Kanal (130c, 330c, 160a, 160b, 160) durch einen Laser gebildet ist.

3. Batterie (100B, 300, 400A, 400B, 610) nach Anspruch 1, wobei der erste Kanal (128c, 328c, 158a, 158b, 158) in einer ersten Ecke des Substrats (102, 302, 402, 602) angeordnet ist und wobei der zweite Kanal (130c, 330c, 160a, 160b, 160) in einer zweiten Ecke des Substrats angeordnet ist, die an die erste Ecke des Substrats angrenzt.

4. Batterie (100B, 300, 400A, 400B, 610) nach Anspruch 1, wobei mindestens eine von der Kathodenverbindung (128, 328) und der Anodenverbindung (130, 330) eines oder mehrere der Folgenden umfasst: (a) Silber, (b) Gold, (c) Kupfer, (d) Antimon und (e) Zinn.

5. Batterie (100B, 300, 400A, 400B, 610) nach Anspruch 1, wobei mindestens eine von der Kathodenverbindung (128, 328) und der Anodenverbindung (130, 330) eines oder mehrere der folgenden leitfähigen Materialien umfasst: (a) eine Tinte, (b) eine Paste, (c) ein Epoxidharz, (d) einen Draht, (e) ein Kabel und (f) einen Verbinder.

6. Verfahren (200B) zur Herstellung einer Batterie, umfassend:
Bereitstellen eines ersten Kathodenstromkollektors und eines ersten Anodenstromkollektors auf einer ersten Seite eines Substrats (222);
Bereitstellen eines zweiten Kathodenstromkollektors und eines zweiten Anodenstromkollektors auf einer zweiten Seite des Substrats (224);
Verwenden mindestens eines Lasers zum Bilden von: (a) einem ersten Kanal durch das Substrat, wobei sich der erste Kanal zwischen dem ersten Kathodenstromkollektor und dem zweiten Kathodenstromkollektor befindet, und (b) einem zweiten Kanal durch das Substrat, wobei sich der zweite Kanal zwischen dem ersten Anodenstromkollektor und dem zweiten Anodenstromkollektor befindet (226);
Bilden einer Kathodenverbindung über den ersten Kanal zwischen dem ersten Kathodenstromkollektor und dem zweiten Kathodenstromkollektor (228); und
Bilden einer Anodenverbindung (230) über den zweiten Kanal zwischen dem ersten Anodenstromkollektor und dem zweiten Anodenstromkollektor;
wobei das Substrat eine eigenständige Schicht aus yttriumoxidstabilisiertem Zirkonoxid, YSZ, ist.

7. Verfahren (200B) nach Anspruch 6, wobei das Verwenden des mindestens einen Lasers zum Bilden des ersten Kanals durch das Substrat ein Durchdringen des ersten Kathodenstromkollektors, des Substrats und des zweiten Kathodenstromkollektors umfasst und wobei das Verwenden des mindestens einen Lasers zum Bilden des zweiten Kanals durch das Substrat ein Durchdringen des ersten Anodenstromkollektors, des Substrats und des zweiten Anodenstromkollektors umfasst.

8. Verfahren (200B) nach Anspruch 6, wobei Eigenschaften des mindestens einen Lasers mindestens eines der Folgenden umfassen: (a) einen Strom zwischen 19 und 31 Ampere und (b) eine Frequenz zwischen 15 und 150 kHz.

9. Verfahren (200B) nach einem der Ansprüche 6 bis 8, wobei das Verwenden des mindestens einen Lasers zum Bilden des ersten Kanals durch das Substrat und des zweiten Kanals durch das Substrat ein Verwenden des mindestens einen Lasers umfasst, ohne das Substrat zu brechen.

10. Verfahren (200B) nach Anspruch 9, wobei das Verwenden des mindestens einen Lasers, ohne das Substrat zu brechen, ein Abstützen des Substrats mit einer Halterung umfasst und wobei die Halterung eine Mehrzahl von Öffnungen umfasst, durch die der mindestens eine Laser das Substrat durchdringen kann.

11. Verfahren (200B) nach Anspruch 6, wobei das Verfahren ferner eines oder mehrere von (a) Ausrichten der Batterie mit einer oder mehreren Batterien und (b) Stapeln der Batterie mit der einen oder den mehreren Batterien umfasst.

12. Verfahren (200B) nach Anspruch 6, wobei das Verfahren ferner umfasst:
Bilden einer ersten Kathode und einer zweiten Kathode, wobei die erste Kathode in elektrischem Kontakt mit dem ersten Kathodenstromkollektor steht und wobei die zweite Kathode in elektrischem Kontakt mit dem zweiten Kathodenstromkollektor steht; und
Glühen der ersten Kathode und der zweiten Kathode.

13. Verfahren (200B) nach Anspruch 12, wobei das Verfahren ferner umfasst:
Bilden eines ersten Feststoffelektrolyten und eines zweiten Feststoffelektrolyten,
wobei sich der erste Feststoffelektrolyt zwischen der ersten Kathode und der ersten Anode befindet und wobei sich der zweite Feststoffelektrolyt zwischen der zweiten Kathode und der zweiten Anode befindet; und Bilden einer ersten Anode und einer zweiten Anode, wobei die erste Anode in elektrischem Kontakt mit dem ersten Anodenstromkollektor steht und wobei die zweite Anode in elektrischem Kontakt mit dem zweiten Anodenstromkollektor steht.

14. Verfahren (200B) nach Anspruch 6, wobei das Bilden der Kathodenverbindung und das Bilden der Anodenverbindung ein Füllen des ersten Kanals bzw. des zweiten Kanals mit einem oder mehreren der Folgenden umfasst: (a) Silber, (b) Gold, (c) Kupfer, (d) Antimon und (e) Zinn.

15. Verfahren (500), umfassend:
Bereitstellen einer Rolle, die eine Mehrzahl von Substraten (502) umfasst, wobei jedes der Mehrzahl von Substraten eine eigenständige Schicht aus yttriumoxidstabilisiertem Zirkonoxid, YSZ, ist, wobei für jedes Substrat in der Mehrzahl von Substraten gilt:
Bilden eines ersten Kathodenstromkollektors und eines ersten Anodenstromkollektors auf einer ersten Seite des Substrats und
Bilden eines zweiten Kathodenstromkollektors und eines zweiten Anodenstromkollektors auf einer zweiten Seite des Substrats (504);
Bilden einer ersten Kathode auf der ersten Seite des Substrats und Bilden einer zweiten Kathode auf der zweiten Seite des Substrats (506);
Glühen der ersten Kathode und der zweiten Kathode bei einer Temperatur (508);
Bilden eines ersten Feststoffelektrolyten auf der ersten Seite des Substrats und Bilden eines zweiten Feststoffelektrolyten auf der zweiten Seite des Substrats (510);
Bilden einer ersten Anode auf der ersten Seite des Substrats und Bilden einer zweiten Anode auf der zweiten Seite des Substrats (512); und
Bilden einer Kathodenverbindung zwischen dem ersten Kathodenstromkollektor und dem zweiten Kathodenstromkollektor und Bilden einer Anodenverbindung zwischen dem ersten Anodenstromkollektor und dem zweiten Anodenstromkollektor (514).

## Revendications

1. Batterie (100B, 300, 400A, 400B, 610) comprenant :
un substrat (102, 302, 402, 602), dans laquelle le substrat (102, 302, 402, 602) est une couche autonome de zircone stabilisée à l'yttrium, YSZ, ayant une première face et une seconde face, dans laquelle un premier collecteur de courant cathodique (104, 304, 404, 604) et un premier collecteur de courant anodique (106, 306, 406, 606) sont sur la première face du substrat, et dans laquelle un second collecteur de courant cathodique (116, 316, 416) et un second collecteur de courant anodique (118, 318, 418) sont sur la seconde face du substrat ;
un premier canal (128c, 328c, 158a, 158b, 158) à travers le substrat entre le premier collecteur de courant cathodique et le second collecteur de courant cathodique ;
un second canal (130c, 330c, 160a, 160b, 160) à travers le substrat entre le premier collecteur de courant anodique et le second collecteur de courant anodique ;
une interconnexion cathodique (128, 328), via le premier canal, entre le premier collecteur de courant cathodique et le second collecteur de courant cathodique ; et
une interconnexion anodique (130, 330), via le second canal, entre le premier collecteur de courant anodique et le second collecteur de courant anodique.

2. Batterie (100B, 300, 400A, 400B, 610) selon la revendication 1, dans laquelle au moins l'un du premier canal (128c, 328c, 158a, 158b, 158) et du second canal (130c, 330c, 160a, 160b, 160) est formé par un laser.

3. Batterie (100B, 300, 400A, 400B, 610) selon la revendication 1, dans laquelle le premier canal (128c, 328c, 158a, 158b, 158) est situé dans un premier coin du substrat (102, 302, 402, 602), et dans laquelle le second canal (130c, 330c, 160a, 160b, 160) est situé dans un second coin du substrat adjacent au premier coin du substrat.

4. Batterie (100B, 300, 400A, 400B, 610) selon la revendication 1, dans laquelle au moins l'une de l'interconnexion cathodique (128, 328) et de l'interconnexion anodique (130, 330) comprend un ou plusieurs des éléments suivants : (a) l'argent, (b) l'or, (c) le cuivre, (d) l'antimoine et (e) l'étain.

5. Batterie (100B, 300, 400A, 400B, 610) selon la revendication 1, dans laquelle au moins l'une de l'interconnexion cathodique (128, 328) et de l'interconnexion anodique (130, 330) comprend un ou plusieurs des matériaux conducteurs suivants : (a) une encre, (b) une pâte, (c) un époxy, (d) un fil, (e) un câble et (f) un connecteur.

6. Procédé (200B) de fabrication d'une batterie comprenant :
la fourniture, sur une première face d'un substrat, d'un premier collecteur de courant cathodique et d'un premier collecteur de courant anodique (222) ;
la fourniture, sur une seconde face du substrat, d'un second collecteur de courant cathodique et d'un second collecteur de courant anodique (224) ;
l'utilisation d'au moins un laser pour former : (a) un premier canal à travers le substrat, dans lequel le premier canal se situe entre le premier collecteur de courant cathodique et le second collecteur de courant cathodique, et (b) un second canal à travers le substrat, dans lequel le second canal se situe entre le premier collecteur de courant anodique et le second collecteur de courant anodique (226) ;
la formation d'une interconnexion cathodique, via le premier canal, entre le premier collecteur de courant cathodique et le second collecteur de courant cathodique (228) ; et
la formation d'une interconnexion anodique (230), via le second canal, entre le premier collecteur de courant anodique et le second collecteur de courant anodique ;
dans lequel le substrat est une couche autonome de zircone stabilisée à l'yttrium, YSZ.

7. Procédé (200B) selon la revendication 6, dans lequel l'utilisation de l'au moins un laser pour former le premier canal à travers le substrat comprend la pénétration à travers le premier collecteur de courant cathodique, le substrat et le second collecteur de courant cathodique, et dans lequel l'utilisation de l'au moins un laser pour former le second canal à travers le substrat comprend la pénétration à travers le premier collecteur de courant anodique, le substrat et le second collecteur de courant anodique.

8. Procédé (200B) selon la revendication 6, dans lequel les caractéristiques de l'au moins un laser comprennent au moins l'un des éléments suivants : (a) un courant compris entre 19 et 31 ampères et (b) une fréquence comprise entre 15 et 150 kHz.

9. Procédé (200B) selon l'une quelconque des revendications 6 à 8, dans lequel l'utilisation de l'au moins un laser pour former le premier canal à travers le substrat et le second canal à travers le substrat comprend l'utilisation de l'au moins un laser sans briser le substrat.

10. Procédé (200B) selon la revendication 9, dans lequel l'utilisation de l'au moins un laser sans briser le substrat comprend le support du substrat avec un dispositif de fixation, et dans lequel le dispositif de fixation comprend une pluralité d'ouvertures permettant à l'au moins un laser de pénétrer dans le substrat.

11. Procédé (200B) selon la revendication 6, dans lequel le procédé comprend en outre un ou plusieurs des éléments suivants : (a) l'alignement de la batterie avec une ou plusieurs batteries et (b) l'empilement de la batterie avec les une ou plusieurs batteries.

12. Procédé (200B) selon la revendication 6, dans lequel le procédé comprend en outre :
la formation d'une première cathode et d'une seconde cathode, dans lequel la première cathode est en contact électrique avec le premier collecteur de courant cathodique, et dans lequel la seconde cathode est en contact électrique avec le second collecteur de courant cathodique ; et
le recuit de la première cathode et de la seconde cathode.

13. Procédé (200B) selon la revendication 12, dans lequel le procédé comprend en outre :
la formation d'un premier électrolyte solide et d'un second électrolyte solide,
dans lequel le premier électrolyte solide se situe entre la première cathode et la première anode, et dans lequel le second électrolyte solide se situe entre la seconde cathode et la seconde anode ; et la formation d'une première anode et d'une seconde anode, dans lequel la première anode est en contact électrique avec le premier collecteur de courant anodique, et dans lequel la seconde anode est en contact électrique avec le second collecteur de courant anodique.

14. Procédé (200B) selon la revendication 6, dans lequel la formation de l'interconnexion cathodique et la formation de l'interconnexion anodique comprennent le remplissage du premier canal et du second canal, respectivement, avec un ou plusieurs des éléments suivants :
(a) l'argent, (b) l'or, (c) le cuivre, (d) l'antimoine et (e) l'étain.

15. Procédé (500) comprenant :
la fourniture d'un rouleau comprenant une pluralité de substrats (502), dans lequel chacun de la pluralité de substrats est une couche autonome de zircone stabilisée à l'yttrium, YSZ, dans lequel, pour chaque substrat dans la pluralité de substrats :
la formation, sur une première face du substrat, d'un premier collecteur de courant cathodique et d'un premier collecteur de courant anodique, et la formation, sur une seconde face du substrat, d'un second collecteur de courant cathodique et d'un second collecteur de courant anodique (504) ;
la formation, sur la première face du substrat, d'une première cathode, et la formation, sur la seconde face du substrat, d'une seconde cathode (506) ;
le recuit de la première cathode et de la seconde cathode à une température (508) ;
la formation, sur la première face du substrat, d'un premier électrolyte solide, et la formation, sur la seconde face du substrat, d'un second électrolyte solide (510) ;
la formation, sur la première face du substrat, d'une première anode, et la formation, sur la seconde face du substrat, d'une seconde anode (512) ; et
la formation d'une interconnexion cathodique entre le premier collecteur de courant cathodique et le second collecteur de courant cathodique, et la formation d'une interconnexion anodique entre le premier collecteur de courant anodique et le second collecteur de courant anodique (514).
